# EUROPEAN PATENT APPLICATION

(11) **EP 4 249 446 A1**
(43) Date of publication of application: **27.09.2023**
(21) Application number: 21901062.6
(22) Date of filing: 03.12.2021
(51) Int. Cl.: C03C 17/00, C03C 17/32, C03C 17/34

(54) **ELECTRONIC DEVICE COMPRISING FLEXIBLE DISPLAY**

(30) Priority: 04.12.2020 KR 20200167983; 23.04.2021 KR 20210052943; 24.05.2021 KR 20210066297
(71) Applicant: Samsung Electronics Co., Ltd., Suwon-si, Gyeonggi-do 16677 (KR)
(72) Inventor: LIM, Kiyul, Suwon-si Gyeonggi-do 16677 (KR); KIM, Youngtae, Suwon-si Gyeonggi-do 16677 (KR); LEE, Hyungjin, Suwon-si Gyeonggi-do 16677 (KR); KIM, Wooktae, Suwon-si Gyeonggi-do 16677 (KR); WOO, Sunghoon, Suwon-si Gyeonggi-do 16677 (KR); JUNG, Dongsoo, Suwon-si Gyeonggi-do 16677 (KR)
(74) Representative: Gulde & Partner
(86) International application number: PCT/KR2021/018196
(87) International publication number: WO 2022/119374

(57) **Abstract**

According to various embodiments of the present disclosure, an electronic device comprises: a flexible display; and a flexible window member which is stacked on the flexible display and is variable in response to the variable shape of the flexible display, wherein the flexible window member includes: a glass member; and a coating layer disposed between the glass member and the flexible display panel, wherein the glass member includes: at least one flat region; and a folding area extended from the at least one flat region, wherein the folding region may include: a first folding region having a thickness that continuously decreases compared to the thickness of the at least one flat region; a second folding region extended from the first folding region and having a thickness smaller than the thickness of the at least one flat region; and a third folding region extended from the second folding region and having a thickness that continuously increases compared to the thickness of the second folding region.

## Description

### [Technical Field]

The disclosure relates to an electronic device and, for example, to a flexible display device and an electronic device including the same.

### [Background Art]

Electronic devices refer to devices configured to perform specific functions according to installed programs, such as home appliances, electronic wallets, portable multimedia players, mobile communication terminals, tablet PCs, video/audio devices, desktop/laptop computers, and vehicle navigation systems. For example, such electronic devices may output stored information as characters, sounds, or images. In line with the high degree of integration of electronic devices and the widespread use of super-fast large-capacity wireless communication, it has recently become possible to equip a single mobile communication terminal with various functions. For example, not only a communication function, but also an entertainment function (for example, gaming), a multimedia function (for example, music/video playback), communication and security functions for mobile banking and the like, a scheduling function, and an electronic wallet function may be integrated into a single electronic device.

Electronic devices may include a display device so as to output information such as images, characters, and videos. Display devices have evolved from vacuum tube types to flat plate types, thereby providing larger screens while substantially reducing the volume of home appliances (for example, TV), and it has thus become possible to output high-quality image information and the like even through compact electronic devices (for example, mobile communication terminals).

An electronic device (for example, mobile communication terminal) may be configured to be foldable, thereby securing portability. A foldable electronic device, if equipped with a flexible display device, may maintain or improve the portability of the electronic device while providing a larger screen in an unfolded state.

### [Detailed Description of the Invention]

### [Technical Problem]

A general display device may include a display element for outputting a screen, and a window member for protecting the display element. The window member may have a level of strength sufficient to protect the display element from external environments, and a level of transparency sufficient to transmit a screen output from the display element. In addition, in order to prevent image quality degradation due to scratching of the window member, for example, the window member may have a lard coating layer formed on the surface thereof by using ceramic, acrylic, or the like, thereby increasing the surface hardness.

In the case of a display device having flexibility, the window member also has flexibility, and it may be difficult to secure a level of strength sufficient to protect the display element. For example, when a display device is equipped with a touchscreen function, the user makes frequent contact with the surface of the window member, and in the case of a flexible display device, external pressure (for example, contact pressure caused by the user) may be transferred to the display element.

Th mechanical strength may be increased by increasing the thickness of the window member, for example, to prevent a contact pressure caused by the user from being transferred to the display element. However, the flexibility is inversely proportional to the mechanical strength of the window member, and there is thus a restriction on increasing the thickness of the window member in the case of a flexible display device.

In order to use a glass member as the window member of a flexible display device, the processed shape needs to be invisible (visibility), a predetermined number of times (for example, 200,000 times) of repeated folding needs to be possible (repeated folding durability), the repulsive force needs to be low during folding (low repulsive force), and processed portions need to have strong resistance to impacts (impact resistance).

Various embodiments of the disclosure may provide a flexible display device wherein, when a glass member is used as a window member of the flexible display device, a high-hardness coating layer and a low-hardness coating layer satisfying above-mentioned predetermined conditions are disposed below the glass member, thereby satisfying visibility, repeated folding durability, low repulsiveness, and impact resistance.

Problems to be solved by the disclosure are not limited to the above-mentioned problems, and may be variously expanded without deviating from the idea and scope of the disclosure.

### [Technical Solution]

According to various embodiments of the disclosure, an electronic device may include a flexible display, and a flexible window member stacked and disposed on the flexible display and configured to be deformable in response to a shape change of the flexible display, wherein the flexible window member may include a glass member and a coating layer disposed between the glass member and the flexible display panel, the glass member may include at least one flat region and a folding region extending from the at least one flat region, and the folding region may include a first folding region having a continuously decreasing thickness compared to the thickness of the at least one flat region, and a second folding region extending from the first folding region and having a thickness smaller than the thickness of the at least one flat region.

According to various embodiments of the disclosure, an electronic device may include a hinge, a first housing and a second housing connected to the hinge, a flexible display disposed on the hinge, the first housing, and the second housing, and a flexible window member stacked and disposed on the flexible display and configured to be deformable in response to a shape change of the flexible display, wherein the flexible window member may include a glass member and a coating layer disposed between the glass member and the flexible display panel, the glass member may include at least one flat region corresponding to the first housing and the second housing, and a folding region extending from the at least one flat region and corresponding to the hinge, and the folding region may include a first folding region having a continuously decreasing thickness compared to the thickness of the at least one flat region, a second folding region extending from the first folding region and having a thickness smaller than the thickness of the at least one flat region, and a third folding region extending from the second folding region and having a continuously increasing thickness compared to the thickness of the second folding region.

According to various embodiments of the disclosure, an electronic device may include a first structure including a first plate configured to provide a first surface and a second surface oriented in a direction opposite to the first surface, a second structure coupled to surround at least a part of the first structure and configured to guide a slide movement of the first structure in a direction parallel to the first surface or the second surface of the first structure, a roller rotatably mounted to the edge a side of the second structure, a flexible display including a first region mounted on the first surface of the first structure and a second region extending from the first region, the flexible display being configured such that the second region is inserted or accommodated inside the second structure from a side of the second structure or exposed to the outside of the second structure while being at least partially guided by the roller according to a slide movement of the first structure, and a flexible window member stacked and disposed on the flexible display and configured to be deformable in response to a shape change of the flexible display, wherein the flexible window member may include a glass member and a coating layer disposed between the glass member and the flexible display panel, the glass member may include at least one flat region corresponding to the first region, and a folding region extending from the at least one flat region and corresponding to the second region, and the folding region may include a first folding region having a continuously decreasing thickness compared to the thickness of the at least one flat region, and a second folding region extending from the first folding region and having a thickness smaller than the thickness of the at least one flat region.

### [Brief Description of Drawings]

FIG. 1 is a block diagram of an electronic device in a network environment according to various embodiments of the disclosure.
FIG. 2A is a view illustrating an unfolded status of an electronic device according to various embodiments of the disclosure.
FIG. 2B is an exploded perspective view of an electronic device according to various embodiments of the disclosure.
FIG. 3A is a view showing a state in which a part of a display is accommodated in a second structure of an electronic device according to other embodiments of the disclosure.
FIG. 3B is a view showing a state in which most of a display is exposed to the outside of a second structure of an electronic device according to other embodiments of the disclosure.
FIG. 3C is an exploded perspective view of an electronic device according to other embodiments of the disclosure.
FIG. 4A is a view showing a window member including a single coating layer disposed on a display of an electronic device according to various embodiments of the disclosure.
FIG. 4B is a view showing a window member including multiple coating layers having different hardnesses arranged on a display of an electronic device according to various embodiments of the disclosure.
FIG. 5A is a view showing a window member including a single coating layer disposed on a display of an electronic device according to another embodiment of the disclosure.
FIG. 5B is a view showing a window member including multiple coating layers having different hardnesses arranged on a display of an electronic device according to another embodiment of the disclosure.
FIG. 6A and FIG. 6B are views showing the degree of visibility by a processing ratio according to a comparative embodiment.
FIG. 6C and FIG. 6D are views showing the degree of visibility by a processing ratio according to various embodiments of the disclosure.
FIG. 7 is a flowchart for explaining a method for coating a low-hardness coating layer according to various embodiments of the disclosure.
FIG. 8 is a view for explaining a process of etching a high-hardness coating layer disposed on a glass member by using plasma according to various embodiments of the disclosure.
FIG. 9 is a view for explaining a process of dispensing a low-hardness coating member on a high-hardness coating layer disposed on a glass member according to various embodiments of the disclosure.
FIG. 10 is a view for explaining a process of pressing a low-hardness coating layer by using glass according to various embodiments of the disclosure.
FIG. 11 is a view for explaining a process of pre-hardening the side surfaces of a low-hardness coating layer according to various embodiments of the disclosure.
FIG. 12 is a view for explaining a process of main-hardening a low-hardness coating layer according to various embodiments of the disclosure.
FIG. 13 is a view showing a glass member disposed on a display and a protective film disposed on the glass member of an electronic device according to various embodiments of the disclosure.
FIG. 14A is a view showing a window member including a single coating layer disposed on a display and a protective film disposed on the window member of an electronic device according to various embodiments of the disclosure.
FIG. 14B is a view showing a window member including multiple coating layers which are arranged on a display and have different hardnesses, and a protective film disposed on the window member of an electronic device according to various embodiments of the disclosure.
FIG. 15A is a view showing a window member including a single coating layer disposed on a display and a protective film disposed on the window member of an electronic device according to another embodiment of the disclosure.
FIG. 15B is a view showing a window member including multiple coating layers which are arranged on a display and have different hardnesses, and a protective film disposed on the window member of an electronic device according to another embodiment of the disclosure.

### [Mode for Carrying out the Invention]

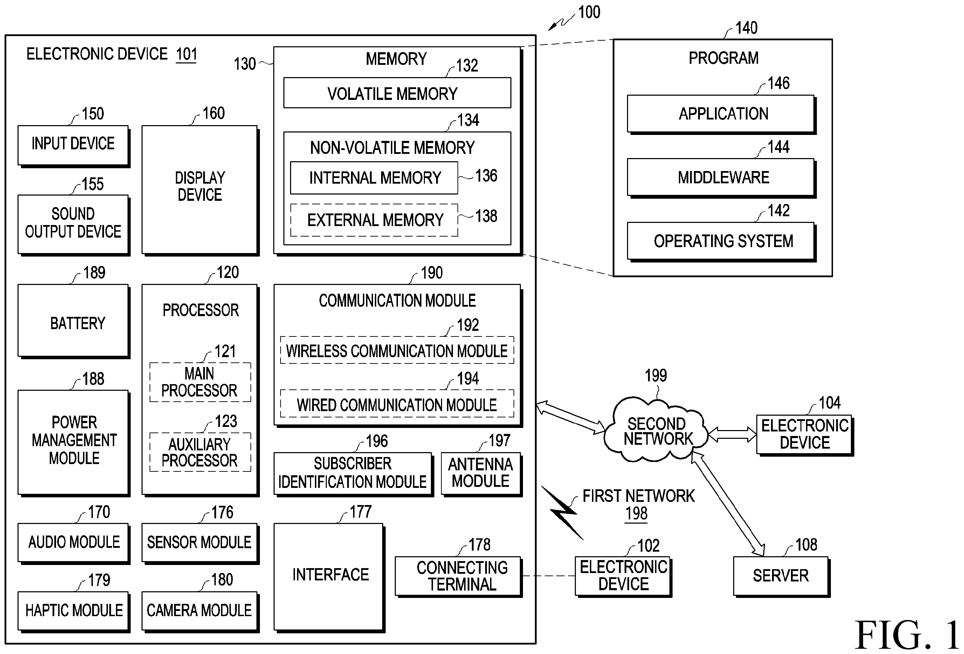

FIG. 1 is a block diagram illustrating an electronic device in a network environment according to various embodiments of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more external devices of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", **"*coupled to*", "*connected with*",** or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

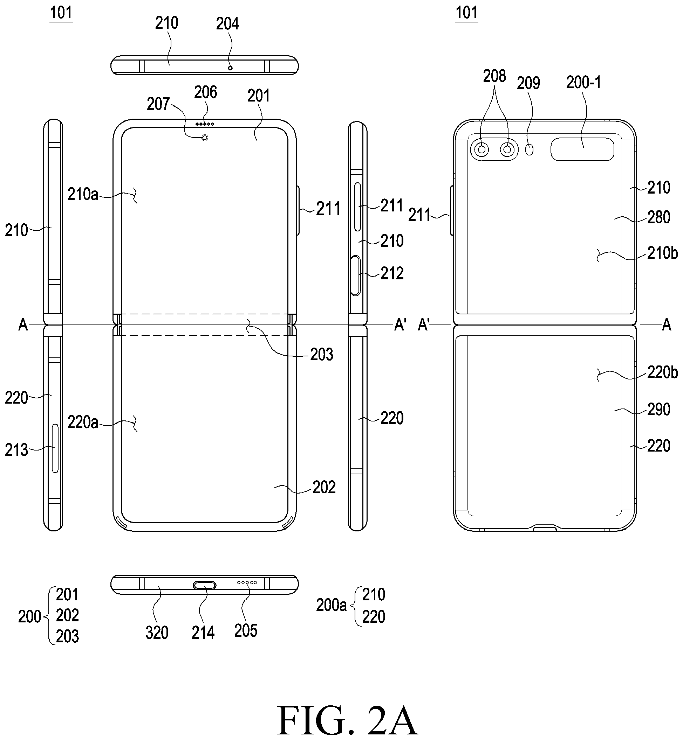

FIG. 2A is a view showing an unfolded status of an electronic device 101 according to various embodiments of the disclosure. FIG. 2A illustrates various views for the front, the rear, and the side surfaces of the electronic device 101 together.

Referring to FIG. 2A, an electronic device 101 according to various embodiment may include a foldable housing 200a and a flexible or foldable display 200 (hereinafter, abbreviated as a "display" 200) (e.g., the display device 160 in FIG. 1) disposed in a space formed by the foldable housing 200a.

According to various embodiments, a surface on which the display 200 is disposed may be defined as the front surface of the electronic device 101. The front surface of the electronic device 101 may be formed by a front plate (e.g., a glass plate including various coating layers or a polymeric plate) of which at least a part is substantially transparent. A surface opposite to the front surface may be defined as the rear surface of the electronic device 101. The rear surface of the electronic device 101 may be formed by a substantially opaque rear plate (hereinafter, referred to as a "rear cover"). For example, the rear cover may be formed of coated or colored glass, ceramic, polymer, metal (e.g., aluminum, stainless steel (STS), or magnesium), or by a combination of at least two of the above materials. In addition, surfaces surrounding a space between the front surface and the rear surface may be defined as the side surfaces of the electronic device 101. The side surfaces may be coupled to the front plate and the rear cover, and may be formed by a side bezel structure (or a "lateral member") including metal and/or polymer. In some embodiments, the rear cover and the side bezel structure may be integrally formed, and may include the same material (e.g., a metal material such as aluminum).

According to various embodiments, the electronic device 101 may include at least one of a display 200, audio modules 204, 205, and 206, a sensor module 209, camera modules 207 and 208, key input devices 211, 212, and 213, and a connector hole 214.

According to some embodiments, the display 200 may be a display of which at least a partial region may be transformed into a flat surface or a curved surface. According to an embodiment, the display 200 may include a folding region 203, a first region 201 disposed at one side (e.g., the upper side of the folding region 203 illustrated in FIG. 2A) with reference to the folding region 203, and a second region 202 disposed at the other side (e.g., the lower side of the folding region 203 illustrated in FIG. 2A) with reference thereto. However, the division of the region of the display 200 illustrated in FIG. 2A may be exemplary, and the display 200 may be divided into multiple (for example, four or more, or two) regions according to a structure or a function thereof. For example, in the embodiment illustrated in FIG. 2A, the region of the display 200 may be divided by the folding region 203 or a folding axis A-A". However, in another embodiment, the region of the display 200 may be divided based on another folding region or another folding axis (e.g., a folding axis perpendicular to the folding axis A-A").

According to various embodiments, the electronic device 101 may be changed to a folded status or an unfolded status. When seen in the direction of the folding axis (e.g., A-A" in FIG. 2A), the electronic device 101 may be folded in two types including an "in-folding" type in which the front surface of the electronic device 101 is folded to form an acute angle, and an "out-folding" type in which the front surface of the electronic device 101 is folded to form an obtuse angle. For example, the electronic device 101 may be configured such that a first surface 210a faces a third surface 220a in the folded status according to the in-folding type, and the directions in which the third surface and the first surface are oriented may be the same in a fully unfolded status. For another example, the electronic device 101 may be configured such that a second surface 210b faces a fourth surface 220b in the folded status according to the out-folding type.

The in-folding type may mean that the display 200 is in a state of not being exposed to the outside in a fully folded status. The out-folding type may mean that the display 200 is in a state of being exposed to the outside in a fully folded status. Hereinafter, for the convenience, although the electronic device 101 of the in-folding type is mainly described, it should be noted that the descriptions can also be applied to the electronic device 101 of the out-folding type.

According to various embodiments, the audio modules 204, 205, or 206 may include a microphone hole 204 and speaker holes 205 and 206. The microphone hole 204 may have a microphone for obtaining external sound disposed therein, and in some embodiments, multiple microphones may be arranged to be able to detect the direction of sound. The speaker holes 205 and 206 may include an external speaker hole 205 and a receiver hole 206 for phone calls. In some embodiments, the speaker holes 205 and 206 and the microphone hole 204 may be implemented as one hole, or a speaker (e.g., a piezo speaker) may be included therein without the speaker holes 205 and 206. The position and number of the microphone hole 204 and the speaker holes 205 and 206 may be variously modified according to an embodiment.

According to various embodiments, the camera modules 207 and 208 may include a first camera module 207 disposed on the first surface 210a of a first housing 310 of the electronic device 101, and a second camera module 208 disposed on the second surface 210b. In addition, the electronic device 101 may further include a flash (not shown). The camera modules 207 and 208 each may include one lens or multiple lenses, an image sensor, and/or an image signal processor. For example, the flash (not shown) may include a light-emitting diode or a xenon lamp.

According to various embodiments, the sensor module 209 may generate an electrical signal or a data value corresponding to an internal operation state of the electronic device 101 or an external environmental state. Although not illustrated in the drawings, the electronic device 101 may additionally or alternatively include other sensor modules for the sensor module 209 in addition to the sensor module 209 provided on the second surface 210b of the first housing 310. For example, the electronic device 101 may include, as a sensor module, at least one of a proximity sensor, a fingerprint sensor, an HRM sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

According to various embodiments, the key input devices 211, 212, and 213 may be arranged on a side surface of the foldable housing 200a. In another embodiment, the electronic device 101 may not include a part or all of the mentioned key input devices 211, 212, and 213, and key input devices not included therein may be implemented as a different type such as a soft key, on the display 200. In some embodiments, the key input devices may be configured such that a key input is implemented by a sensor module.

According to various embodiments, the connector hole 214 may be configured to accommodate a connector (for example, a USB connector) for transmitting or receiving power and/or data to or from an external electronic device, or additionally or alternatively, to accommodate a connector for transmitting or receiving an audio signal to or from an external electronic device.

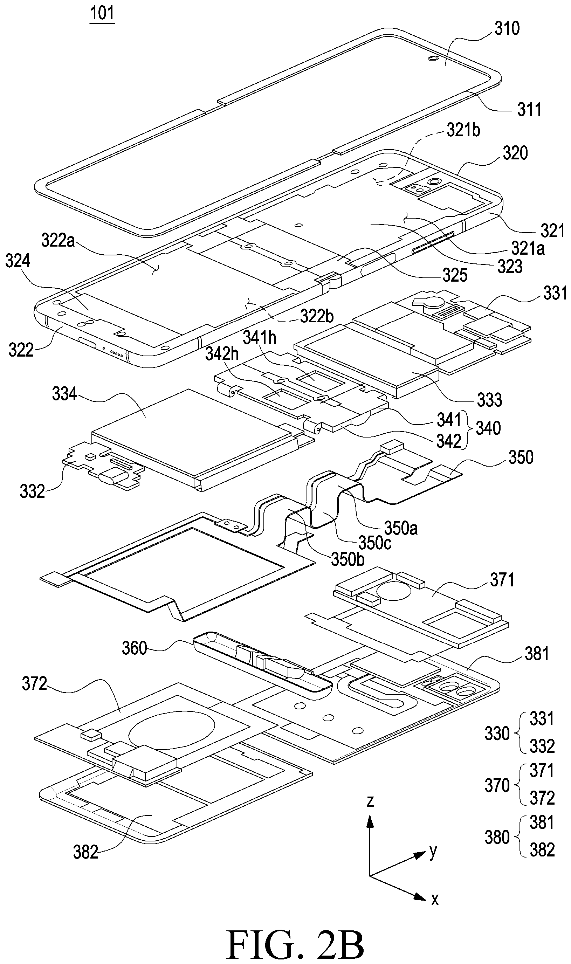

According to various embodiments, the foldable housing 200a may include a first housing structure 210, a second housing structure 220, a first rear cover 280, a second rear cover 290, and a hinge structure (e.g., the hinge structure 340 in FIG. 2B). The foldable housing 200a of the electronic device 101 is not limited to the shape and the combination illustrated in FIG. 2A, and may be implemented by other shapes or a combination and/or coupling of components. For example, in another embodiment, the first housing structure 210 and the first rear cover 280 may be integrally formed, and the second housing structure 220 and the second rear cover 290 may be integrally formed. According to various embodiments of the disclosure, a "housing structure" may be a configuration in which various components including a housing are combined with and/or coupled to each other.

According to various embodiments, the first housing structure 210 may be connected to a hinge structure (e.g., the hinge structure 340 in FIG. 2B described later), and may include a first surface 210a oriented in a first direction and a second surface 210b oriented in a second direction opposite to the first direction. The second housing structure 220 may be connected to a hinge structure (e.g., the hinge structure 340 in FIG. 2B), may include a third surface 220a oriented in a third direction and a fourth surface 220b oriented in a fourth direction opposite to the third direction, and may rotate with respect to the first housing structure 210 around the hinge structure (or the folding axis A-A").

According to various embodiments, the first housing structure 210 and the second housing structure 220 may be arranged on both sides (or upper and lower sides) around the folding axis A-A", and may have a generally symmetrical shape with respect to the folding axis (A-A"). The angle formed by or the distance between the first housing structure 210 and the second housing structure 220 may become different depending on whether the electronic device 101 is in an unfolded status, a folded status, or a partially unfolded (or partially folded) intermediate status. According to an embodiment, differently from the second housing 220, the first housing 210 may additionally include various sensors. However, the first housing and the second housing may have a mutually symmetrical shape in a region in which the various sensors are not arranged.

According to various embodiments, at least a part of the first housing structure 210 and the second housing structure 220 may be formed of a metal material or a non-metal material having rigidity of a degree selected in order to support the display 200. The at least a portion thereof, which is formed of a metal material, may provide a ground plane of the electronic device 101, and may be electrically connected to a ground line formed on a printed circuit board (e.g., the printed circuit board 330 in FIG. 2B).

According to various embodiments, the first rear cover 280 may be disposed on the rear surface of the electronic device 101, which is a side of the folding axis A-A" and, for example, and may have a substantially rectangular edge (periphery), and the edge thereof may be surrounded by the first housing structure 210. Similarly, the second rear cover 290 may be disposed on the rear surface of the electronic device 101, which is the other side of the folding axis A-A", and the edge thereof may be surrounded by the second housing structure 220.

According to various embodiments, the first rear cover 280 and the second rear cover 290 may have a substantially symmetrical shape with reference to the folding axis A-A". However, the first rear cover 280 and the second rear cover 290 may not necessarily have a mutually symmetrical shape, and in another embodiment, the electronic device 101 may include the first rear cover 280 and the second rear cover 290 having various shapes. In another embodiment, the first rear cover 280 may be integrally formed with the first housing structure 210, and the second rear cover 290 may be integrally formed with the second housing structure 220.

According to various embodiments, the first rear cover 280, the second rear cover 290, the first housing structure 210, and the second housing structure 220 may form a space in which various components (e.g., a printed circuit board or a battery) of the electronic device 101 may be arranged. According to an embodiment, one or more components may be arranged or may be visually exposed on the rear surface of the electronic device 101. For example, at least a part of a sub-display 200_1 may be visually exposed through the first rear cover 280. In another embodiment, one or more components or sensors may be visually exposed through the first rear cover 280. In various embodiments, the sensor may include a proximity sensor and/or a rear camera. In addition, although not separately illustrated in the drawing, one or more components or sensors may be visually exposed through the second rear cover 290.

According to various embodiments, a front camera 207 exposed on the front surface of the electronic device 101 through one or more openings, or a rear camera 208 exposed through the first rear cover 280 may include one lens or multiple lenses, an image sensor, and/or an image signal processor. For example, a flash 209 may include a light-emitting diode or a xenon lamp. In some embodiments, two or more lenses (an infrared camera, a wide-angle lens, and a telephoto lens) and image sensors may be arranged on one surface of the electronic device 101.

FIG. 2B is an exploded perspective view of an electronic device 101 according to various embodiments of the disclosure.

Referring to FIG. 2B, in various embodiments, the electronic device 101 may include a display 310 (e.g., the display 200 in FIG. 2A), a foldable housing 320 (e.g., the foldable housing 200a in FIG. 2A), a printed circuit board 330, a hinge structure 340, a flexible connection member 350, a hinge cover 360, an antenna structure 370, and a rear cover 380. Hereinafter, detailed descriptions of configurations (e.g., the display 310, the foldable housing 320, and the rear cover 380) overlapping those in FIG. 2A will be omitted.

According to various embodiments, the display 310 may be exposed through a significant portion of the front plate 311. In some embodiments, the shape of the display 310 may be formed to be generally the same as the outer perimeter shape of the front plate 311.

According to various embodiments, the foldable housing 320 may include a first housing 321 and second housing 322. According to an embodiment, the first housing 321 may include a first surface 321a and a second surface 321b oriented in a direction opposite to the first surface 321a, and the second housing 322 may include a third surface 322a and a fourth surface 322b oriented in a direction opposite to the third surface 322a. The foldable housing 320 may additionally or alternatively include a bracket assembly. The bracket assembly may include a first bracket assembly 323 disposed in the first housing 321 and a second bracket assembly 324 disposed in the second housing 322. At least a part of the bracket assembly, for example, a portion 325 including at least a portion of the first bracket assembly 323 and at least a portion of the second bracket assembly 324 may function as a plate for supporting the hinge structure 340.

According to various embodiments, various electrical elements may be arranged on the printed circuit board 330. For example, a processor (e.g., the processor 120 in FIG. 1), a memory (e.g., the memory 130 in FIG. 1), and/or an interface (e.g., the interface 177 in FIG. 1) may be mounted on the printed circuit board 330. For example, the processor may include one or more of a central processing device, an application processor, a graphic processing device, an image signal processor, a sensor hub processor, and a communication processor. For example, the memory may include a volatile memory or a non-volatile memory. For example, the interface may include a high-definition multimedia interface (HDMI), a universal serial bus (USB) interface, an SD card interface, and/or an audio interface. For example, the interface may electrically or physically connect the electronic device 300 to an external electronic device, and may include a USB connector, an SD card/MMC connector, or an audio connector.

According to various embodiments, the printed circuit board 330 may include a first printed circuit board 331 disposed at the side of the first bracket assembly 323 and a second printed circuit board 332 disposed at the side of the second bracket assembly 324. The first printed circuit board 331 and the second printed circuit board 332 may be arranged in a space formed by the foldable housing 320, the bracket assembly, a first rear cover 381, and/or a second rear cover 382. Components for implementing various functions of the electronic device 101 may be separately arranged on the first printed circuit board 331 and the second printed circuit board 332, respectively. For example, a processor may be disposed on the first printed circuit board 331, and an audio interface may be disposed on the second printed circuit board 332.

According to various embodiments, a battery for supplying power to the electronic device 101 may be disposed adjacent to the printed circuit board 330. For example, at least a part of the battery may be disposed on a flat surface substantially the same as the printed circuit board 330. According to an embodiment, a first battery 333 may be disposed adjacent to the first printed circuit board 331, and a second battery 334 may be disposed adjacent to the second printed circuit board 332. The battery may be a device for supplying power to at least one element of the electronic device 101, and for example, may include a non-rechargeable primary cell, a rechargeable secondary cell, or a fuel cell. The battery may also be integrally disposed inside the electronic device 101, or may be disposed to be detachable/attachable from/to the electronic device 101. According to various embodiments, the hinge structure 340 may be a configuration for supporting the foldable housing 320 and/or the bracket assembly so that the foldable housing 320 rotates around a folding axis (e.g., A-A" in FIG. 2A). The hinge structure 340 may include a first hinge structure 341 disposed at the side of the first printed circuit board 331 and a second hinge structure 342 disposed at the side of the second printed circuit board 332. The hinge structure 340 may be disposed between the first printed circuit board 331 and the second printed circuit board 332. According to an embodiment, the hinge structure 340 may be formed substantially integrally with a portion 325 including at least a portion of the first bracket assembly 323 and at least a portion of the second bracket assembly 324.

According to various embodiments, a "housing structure" may include a foldable housing 320, and may be a configuration in which one or more elements arranged inside the housing 320 are assembled with and/or coupled to each other. The housing structure may include a first housing structure and a second housing structure. For example, a configuration, which includes the first housing 321 and is assembled while further including at least one of the first bracket assembly 323 disposed inside the first housing 321, the first printed circuit board 331, and the first battery 333, may be referred to as a "first housing structure". As another example, a configuration, which includes the second housing 322 and is assembled while further including at least one of the second bracket assembly 324 disposed inside the second housing 322, the second printed circuit board 332, and the second battery 334, may be referred to as a "second housing structure". However, the "first housing structure and second housing structure" are not limited to the addition of the above-described elements. In addition, it should be noted that various elements may be additionally included therein or may be omitted therefrom.

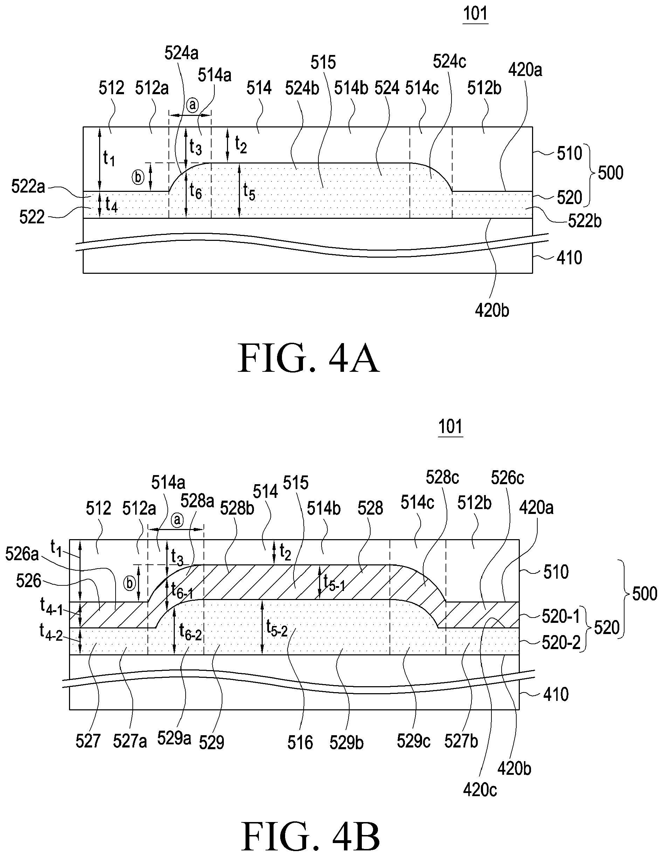

According to various embodiments, for example, the flexible connection member 350 may be a flexible printed circuit (FPCB) and may connect various electrical elements arranged on the first printed circuit board 331 and the second printed circuit board 332. To this end, the flexible connection member 350 may be disposed to cross the "first housing structure and the "second housing structure". According to an embodiment, the flexible connection member 350 may be formed such that at least a part thereof crosses the hinge structure 340. According to an embodiment, for example, the flexible connection member 350 may cross the hinge structure 340 in a direction parallel to the y-axis in FIG. 4 and thus may be configured to connect the first printed circuit board 331 and the second printed circuit board 332. For another example, the flexible connection member 350 may be fitted and thus coupled to the openings 341h and 342h formed through the hinge structure 340. At this time, a portion 350a of the flexible connection member 350 may be disposed to cross a side (e.g., the upper part) of the first hinge structure 341, and another part 350b of the flexible connection member 350 may be disposed to cross a side (e.g., the upper part) of the second hinge structure 342. In addition, another part 350c of the flexible connection member 350 may be disposed on the other side (e.g., the lower part) of each of the first hinge structure 341 and the second hinge structure 342. A space (hereinafter, referred to as a "hinge space"), which is surrounded by at least a part of the first hinge structure 341, at least a part of the second hinge structure 342, and at least a part of the hinge cover 360, may be formed at a position adjacent to the first hinge structure 341 and the second hinge structure 342. According to an embodiment, the at least a portion 350c of the flexible connection member 350 may be disposed in the hinge space.

According to various embodiments, the hinge cover 360 may be configured to cover at least a part of the hinge space. The hinge cover 360 may close the hinge space together with the hinge structure 340, and may protect a component (e.g., the at least a portion 350c of the flexible connection member 350) disposed in the hinge space from external impact. According to an embodiment, the hinge cover 360 may be disposed between the first housing 321 and the second housing 322. According to an embodiment, the hinge cover 360 may be coupled to each of at least a part of the first housing and at least a part of the second housing.

According to various embodiments, the antenna structure 370 (e.g., the antenna module 197 in FIG. 1) may be disposed between the rear cover 380 and a battery. The antenna structure 370 in one electronic device 101 may include multiple antenna modules. For example, the antenna structure 370 may include a first antenna module 371 disposed at the side of the first housing 321 and a second antenna module 372 disposed at the side of the second housing 322. The antenna modules may be configured to include at least one radiator. For example, the antenna structure 370 may also include a near field communication (NFC) antenna, a wireless charging antenna, and/or a magnetic secure transmission (MST) antenna. For example, the antenna structure 370 may perform a short-range communication with an external device, or may transmit or receive power required for charging, in a wireless. In another embodiment, the antenna structure may be formed by a part of a side bezel structure and/or a bracket assembly of the foldable housing 320 or a combination thereof.

According to various embodiments, the rear cover 380 may include a first rear cover 381 and a second rear cover 382. The rear cover 380 may be coupled to the foldable housing 320, and thus may function to protect the above-described components (e.g., the printed circuit board 330, the battery, the flexible connection member 350, and the antenna structure 370) arranged in the foldable housing 320. As described above, the rear cover 380 may be substantially integrally formed with the foldable housing 320.

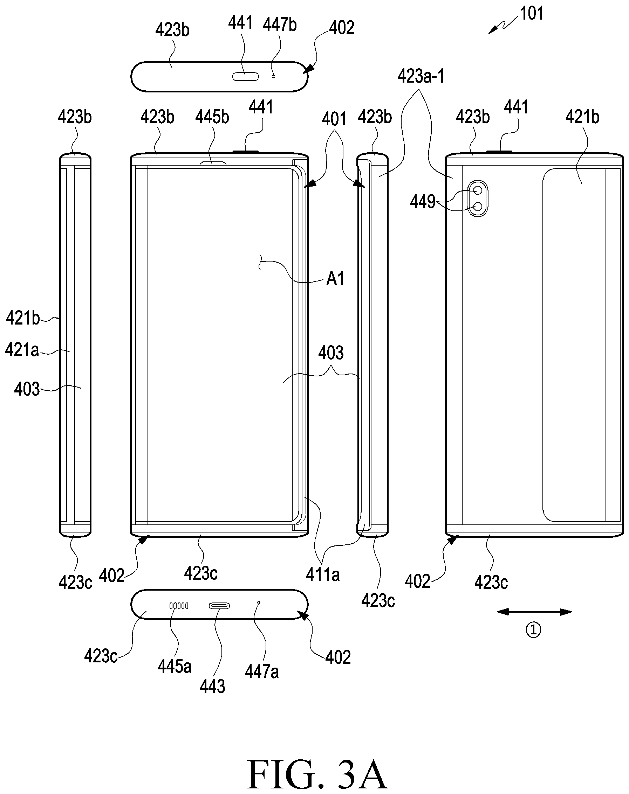

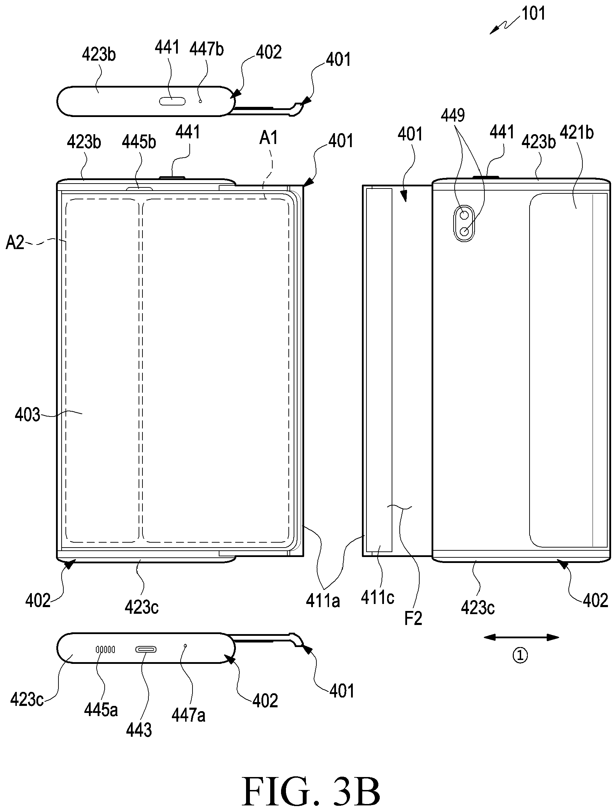

FIG. 3A is a view showing a state in which a portion (e.g., the second region A2) of a display 4031 is accommodated in a second structure 402 of an electronic device 101 according to other embodiments of the disclosure. FIG. 3B is a view showing a state in which most of a display 403 is exposed to the outside of a second structure 402 of an electronic device 101 according to other embodiments of the disclosure.

The state illustrated in FIG. 3A may be defined as a state in which a first structure 401 is closed with respect to a second structure 402, and the state illustrated in FIG. 3B may be defined as a state in which the first structure 401 is opened with respect to the second structure 402. According to an embodiment, a "closed state" or an "opened state" may be defined as a state in which an electronic device is closed or open.

Referring to FIG. 3A and FIG. 3B, the electronic device 101 may include the first structure 401 and the second structure 402 movably disposed in the first structure 401. According to an embodiment, it may be interpreted that the electronic device 101 has a structure in which the first structure 401 is slidably movably disposed on the second structure 402. According to an embodiment, the first structure 401 may be disposed to be able to reciprocate by a predetermined distance in the illustrated direction (for example, the direction ① indicated by an arrow) with respect to the second structure 402.

According to various embodiments, for example, the first structure 401 may be referred to as a first housing, a slide part, or a slide housing, and may be disposed to be able to reciprocate on the second structure 402. According to an embodiment, for example, the second structure 402 may be referred to as a second housing, a main part, or a main housing, and may accommodate various electrical and electronic components such as a main circuit board or a battery. A portion (e.g., the first region A1) of a display 403 (e.g., a flexible display) may be seated on the first structure 401. According to an embodiment, as the first structure 401 moves (e.g., slides and moves) relative to the second structure 402, the other part (e.g., the second region A2) of the display 403 may be accommodated inside the second structure 402 (e.g., a slide-in operation) or exposed to the outside of the second structure 402 (e.g., a slide-out operation).

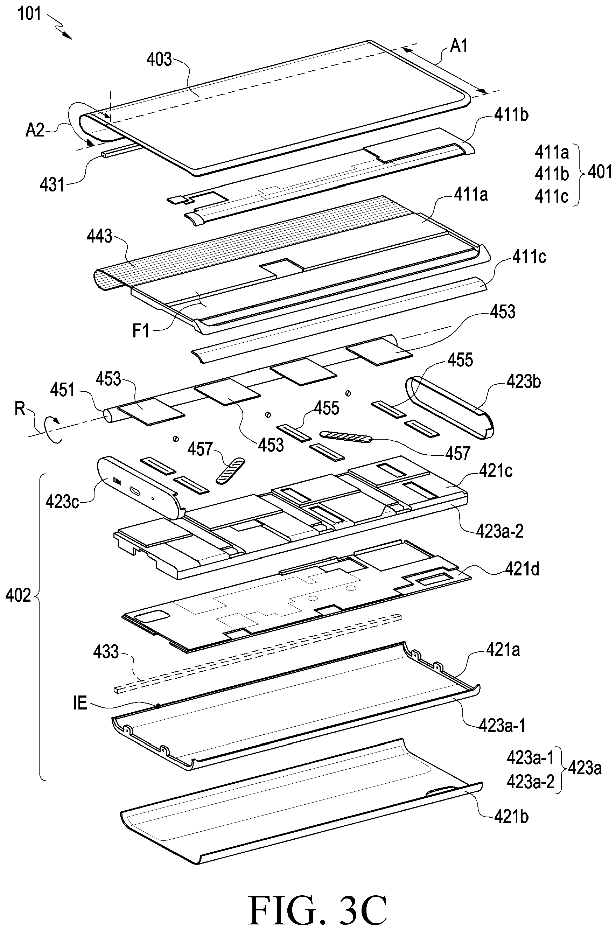

According to various embodiments, the first structure 401 may include a first plate 411a (e.g., a slide plate), and may include a first surface (F1, see FIG. 3C) formed by including at least a portion of the first plate 411a, and a second surface F2 oriented in a direction opposite to the first surface F1. According to an embodiment, the second structure 402 may include a second plate (421a, see FIG. 3C) (e.g., a rear case), a first side wall 423a extending from the second plate 421a, a second side wall 423b extending from the first side wall 423a and the second plate 421a, a third side wall 423c which extends from the first side wall 423a and the second plate 421a and is parallel to the second side wall 423b, and/or a rear plate 421b (e.g., a rear window). According to an embodiment, the second side wall 423b and the third side wall 423c may be formed perpendicular to the first side wall 423a. According to an embodiment, the second plate 421a, the first side wall 423a, the second side wall 423b, and the third side wall 423c may be formed such that each of one side (e.g., the front surface (face)) of each thereof is open, so as to accommodate (or surround) at least a part of the first structure 401. The first structure 401 may be coupled to the second structure 402 in a state of being at least partially surrounded by the second structure, and may slide and move in a direction parallel to the first surface F1 or the second surface F2, for example, the direction ① of an arrow while being guided by the second structure 402.

According to various embodiments, the second side wall 423b or the third side wall 423c may be omitted. According to an embodiment, the second plate 421a, the first side wall 423a, the second side wall 423b, and/or the third side wall 423c may be formed as separate structures, and then coupled to or assembled with each other. The rear plate 421b may be coupled to cover at least a part of the second plate 421a. According to an embodiment, the rear plate 421b may be substantially integrally formed with the second plate 421a. According to an embodiment, the second plate 421a or the rear plate 421b may cover at least a part of the display 403. For example, the display 403 may be at least partially accommodated inside the second structure 402, and the second plate 421a or the rear plate 421b may cover a part of the display 403, which is accommodated inside the second structure 402.

According to various embodiments, the first structure 401 may move in the first direction (e.g., the direction ①) parallel to the second plate 421a (e.g., a rear case) and the second side wall 423b so as to become an open state or a closed state with respect to the second structure 402, and the first structure 401 may be moved to be positioned at a first distance from the first side wall 423a in the closed state, and moved to be positioned at a second distance greater than the first distance from the first side wall 423a in the open state. According to an embodiment, when being in the closed state, the first structure 401 may be positioned to surround a portion of the first side wall 423a.

According to various embodiments, the electronic device 101 may include the display 403, a key input device 441, a connector hole 443, audio modules 445a, 445b, 447a, and 447b, or a camera module 449. Although not illustrated, the electronic device 101 may further include an indicator (e.g., an LED device) or various sensor modules.

According to various embodiments, the display 403 may include a first region A1 and a second region A2. According to an embodiment, the first region A1 may extend while substantially crossing at least a part of the first surface F1, and thus be disposed on the first surface F1. The second region A2 may extend from the first region A1, and according to a slide movement of the first structure 401, may be inserted or accommodated in the second structure 402 (e.g., a housing), or exposed to the outside of the second structure 402. As will be described later, the second region A2 may move while being guided by a roller (451, see FIG. 3C) mounted to the second structure 402 to be accommodated inside the second structure 402 or exposed to the outside. For example, while the first structure 401 slides and moves, a portion of the second region A2 may be transformed into a curved-surface shape at a position corresponding to the roller 451.

According to various embodiments, when seen from above the first plate 411a (e.g., a slide plate), in case that the first structure 401 moves from the closed state to the open state, the second region A2 may form a substantially flat surface together with the first region A1 while being gradually exposed to the outside of the second structure 402. The display 403 may be coupled or adjacently disposed to a touch detection circuit, a pressure sensor capable of measuring the intensity (pressure) of touch, and/or a digitizer for detecting a magnetic field-type stylus pen. According to an embodiment, the second region A2 may be at least partially accommodated inside the second structure 402, and even in the state (e.g., the closed state) illustrated in FIG. 2A, a part of the second region A2 may be exposed to the outside. According to an embodiment, regardless of the closed state or the open state, a part of the exposed second region A2 may be positioned on the roller 451, and a part of the second region A2 at a position corresponding to the roller 451 may maintain a curved-surface shape.

The key input device 441 may be disposed on the second side wall 423b or the third side wall 423c of the second structure 402. According to the outer appearance and use conditions, the electronic device 101 may be designed such that the illustrated key input device 441 is omitted or an additional key input device(s) is included. According to an embodiment, the electronic device 101 may include a key input device not illustrated, for example, a home key button or a touch pad disposed around the home key button. According to an embodiment, at least a part of the key input device 441 may be positioned in a region of the first structure 401.

According to various embodiments, the connector hole 443 may be omitted according to an embodiment, and may accommodate a connector (e.g., a USB connector) for transmitting or receiving power and/or data to or from an external electronic device. Although not illustrated, the electronic device 101 may include multiple connector holes 443, and a part of the multiple connector holes 443 may function as a connector hole for transmitting or receiving an audio signal to or from an external electronic device. In the illustrated embodiment, although the connector hole 443 is formed through the third side wall 423c, the disclosure is not limited thereto, and the connector hole 443 or a connector hole not illustrated may be formed through the first side wall 423a or the second side wall 423b.

According to various embodiments, the audio modules 445a, 445b, 447a, and 447b may include speaker holes 445a and 445b or microphone holes 447a and 447b. One of the speaker holes 445a and 445b may be provided as a receiver hole for voice communication, and the other may be provided as an external speaker hole. A microphone for obtaining external sound may be disposed inside each of the microphone holes 447a and 447b, and according to an embodiment, multiple microphones may be arranged to be able to detect the direction of sound. According to an embodiment, the speaker holes 445a and 445b and the microphone holes 447a and 447b may be implemented as one hole, or a speaker (e.g., a piezo speaker) may be included without the speaker holes 445a and 445b. According to an embodiment, a speaker hole indicated by reference number "445b" may be formed through the first structure 401 and thus be used as a receiver hole for voice communication, and a speaker hole (e.g., an external speaker hole) indicated by reference number "445a" or microphone holes 447a and 447b may be formed through the second structure 402 (e.g., one of the side surfaces 423a, 423b, and 423c).

The camera module 449 may be provided in the second structure 402 and may photograph a subject in a direction opposite to the first region A1 of the display 403. The electronic device 101 may include multiple camera modules 449. For example, the electronic device 101 may include a wide-angle camera, a telephoto camera, or a macro camera, and according to an embodiment, may include an infrared projector and/or an infrared receiver to measure the distance to a subject. The camera module 449 may include one lens or multiple lenses, an image sensor, and/or an image signal processor. Although not illustrated, the electronic device 101 may further include a camera module (e.g., a front camera) for photographing a subject in a direction opposite to the first region A1 of the display 403. For example, the front camera may be disposed around the first region A1 or in a region overlapping the display 403, and when disposed in a region overlapping the display 403, may photograph a subject through the display 403.

According to various embodiments, an indicator (not shown) of the electronic device 101 may be disposed in the first structure 401 or the second structure 402, and may include a light-emitting diode to provide state information of the electronic device 101 as a visual signal. A sensor module (not shown) of the electronic device 101 may generate an electrical signal or a data value corresponding to an internal operation state of the electronic device 101 or an external environmental state. For example, the sensor module may include a proximity sensor, a fingerprint sensor, or a biometric sensor (e.g., an iris/face recognition sensor or an HRM sensor). According to an embodiment, for example, at least one of a gesture sensor, a gyro sensor, a barometric pressure sensor, a magnetic sensor, an acceleration sensor, a grip sensor, a color sensor, an infrared (IR) sensor, a temperature sensor, a humidity sensor, or an illuminance sensor may be included therein.

FIG. 3C is an exploded perspective view of an electronic device 101 according to other embodiments of the disclosure.

Referring to FIG. 3C, the electronic device 101 may include the first structure 401, the second structure 402 (e.g., a housing), the display 403 (e.g., a flexible display), a guide member (e.g., the roller 451), a support sheet (a support sheet) 453, and/or a multi-joint hinge structure 413. A part (e.g., the second region A2) of the display 403 may be accommodated inside the second structure 402 while being guided by the roller 451.

According to various embodiments, the first structure 401 may include the first plate 411a (e.g., a slide plate), a first bracket 411b mounted on the first plate 411a, and/or a second bracket 411c mounted on the first plate 411a. The first structure 401, for example, the first plate 411a, the first bracket 411b, and/or the second bracket 411c may be formed of a metal material and/or a non-metal (e.g., polymeric) material. The first plate 411a may be mounted to the second structure 402 (e.g., a housing), and may linearly reciprocate in one direction (e.g., the direction ① of an arrow in FIG. 3A) while being guided by the second structure 402. According to an embodiment, the first bracket 411b may be coupled to the first plate 411a so as to form a first surface F1 of the first structure 401 together with the first plate 411a. The first region A1 of the display 403 may be substantially mounted on the first surface F1 and thus be maintained in a flat shape. The second bracket 411c may be coupled to the first plate 411a so as to form the second surface F2 of the first structure 401 together with the first plate 411a. According to an embodiment, the first bracket 411b and/or the second bracket 411c may be integrally formed with the first plate 411a. The first bracket, the second bracket 411c, and/or the first plate 411a may be appropriately designed in consideration of an assembly structure or a manufacturing process of a product to be manufactured. The first structure 401 or the first plate 411a may be coupled to the second structure 402, and may slide and move with respect to the second structure 402.

According to various embodiments, the multi-joint hinge structure 413 may include multiple bars or rods (not shown) and may be connected to an end of the first structure 401. For example, as the first structure 401 slides and moves, the multi-joint hinge structure 413 may move relative to the second structure 402, and in the closed state (e.g., the state illustrated in FIG. 3A), may be substantially accommodated inside the second structure 402. According to an embodiment, even in the closed state, a part of the multi-joint hinge structure 413 may not be accommodated inside the second structure 402. For example, even in the closed state, a part of the multi-joint hinge structure 413 may be positioned to correspond to the roller 451 at the outside of the second structure 402. The multiple rods of the multi-joint hinge structure 414 may extend in a straight line to be disposed parallel to a rotation axis R of the roller 451, and may be disposed along a direction perpendicular to the rotation axis R, for example, along a direction in which the first structure 401 slides and moves.

According to various embodiments, each of the multiple rods of the multi-joint hinge structure 414 may pivot around another adjacent rod 414 while maintaining a parallel state with another adjacent rod 414. Accordingly, as the first structure 401 slides and moves, the multiple rods of the multi-joint hinge structure 414 may be arranged while forming a curved-surface shape or arranged while forming a flat-surface shape. For example, as the first structure 401 slides and moves, a portion of the multi-joint hinge structure 413, which faces the roller 451, may be formed in a curved surface, and a portion of the multi-joint hinge structure 413, which does not face the roller 451, may be formed in a flat surface. According to an embodiment, the second region A2 of the display 403 may be mounted or supported to the multi-joint hinge structure 413, and in the open state (e.g., the state illustrated in FIG. 3B), may be exposed to the outside of the second structure 402 together with the first region A1. In a state where the second region A2 is exposed to the outside of the second structure 402, the multi-joint hinge structure 413 may be formed in a substantially flat surface, and thus may support or maintain the second region A2 in a flat state.

According to various embodiments, the second structure 402 (e.g., a housing) may include the second plate 421a (e.g., a rear case), a printed circuit board (not shown), the rear plate 421b, the third plate 421c (e.g., a front case), and a support member 421d. The second plate 421a, for example, the rear case may be disposed to be oriented in a direction opposite to the first surface F1 of the first plate 411a, and substantially, may provide the outer appearance shape of the second structure 402 or the electronic device 101. According to an embodiment, the second structure 402 may include the first side wall 423a extending from the second plate 421a, the second side wall 423b which extends from the second plate 421a and is formed to be substantially perpendicular to the first side wall 423a, and the third side wall 423c which extends from the second plate 421a and is substantially perpendicular to the first side wall 423a and parallel to the second side wall 423b. In the illustrated embodiment, although a structure, in which the second side wall 423b and the third side wall 423c are manufactured as components separated from the second plate 421a and then mounted or assembled to the second plate 421a, is exemplified, the second side wall and the third side wall may be integrally formed with the second plate 421a. A space of the second structure 402, which does not overlap the multi-joint hinge structure 413, may accommodate an antenna for proximity wireless communication, an antenna for wireless charging, or an antenna for magnetic secure transmission (MST).

According to various embodiments, the rear plate 421b may be coupled to the outer surface of the second plate 421a, and may be integrally manufactured with the second plate 421a according to an embodiment. According to an embodiment, the second plate 421a may be made of a metal or a polymeric material and the rear plate 421b may be made of materials such as metal, glass, synthetic resin, or ceramic, so as to provide a decoration effect in the outer appearance of the electronic device 101. According to an embodiment, the second plate 421a and/or the rear plate 421b may be made of a material which transmits light at least partially (e.g., an auxiliary display region). For example, in a state where a part (e.g., the second region A2) of the display 403 is accommodated inside the second structure 402, the electronic device 101 may output visual information by using a partial region of the display 403, which is accommodated in the second structure 402. The auxiliary display region may provide visual information, which is output from a region accommodated inside the second structure 402, to the outside of the second structure 402.

According to various embodiments, the third plate 421c may be made of a metal or a polymeric material, and be coupled to the second plate 421a (e.g., a rear case), the first side wall 423a, the second side wall 423b, and/or the third side wall 423c so as to form the inner space of the second structure 402. According to an embodiment, the third plate 421c may be referred to as a "front case", and the first structure 401, for example, the first plate 411a may slide and move while substantially facing the third plate 421c. According to an embodiment, the first side wall 423a may be formed by a combination of a first side wall part 423a-1 extending from the second plate 421a and a second side wall part 423a-2 formed on the edge of a side of the third plate 421c. According to an embodiment, the first side wall part 423a-1 may be coupled to surround the edge of a side of the third plate 421c, for example, the second side wall part 423a-2, and in this case, the first side wall part 423a-1 itself may form the first side wall 423a.

According to various embodiments, the support member 421d may be disposed in the space between the second plate 421a and the third plate 421c, and may have a plate which has a flat shape and made of a metal or a polymeric material. The support member 421d may provide an electromagnetic shielding structure in the inner space of the second structure 402 or may improve mechanical rigidity of the second structure 402. According to an embodiment, in case of being stored inside the second structure 402, the multi-joint hinge structure 413 and/or a partial region (e.g., the second region A2) of the display 403 may be positioned in the space between the second plate 421a and the support member 421d.

According to various embodiments, a printed circuit board not illustrated may be disposed in the space between the third plate 421c and the support member 421d. For example, the printed circuit board may be accommodated in the space separated by a support member 421d from the space in which the multi-joint hinge structure 413 and/or a partial region of the display 403 are accommodated, in the inside of the second structure 402. A processor, a memory, and/or an interface may be mounted on the printed circuit board. For example, the processor may include one or more of a central processing device, an application processor, a graphic processing device, an image signal processor, a sensor hub processor, and a communication processor.

For example, the memory may include a volatile memory or a non-volatile memory.

For example, the interface may include a high-definition multimedia interface (HDMI), a universal serial bus (USB) interface, an SD card interface, and/or an audio interface. For example, the interface may electrically or physically connect the electronic device 101 to an external electronic device, and may include a USB connector, an SD card/MMC connector, or an audio connector.

According to various embodiments, the display 403 may be a flexible display based on an organic light-emitting diode, and may be at least partially transformed into a curved-surface shape while maintaining a generally flat-surface shape. According to an embodiment, the first region A1 of the display 403 may be mounted or attached to the first surface F1 of the first structure 401 and thus maintained in a substantially flat-plate shape. The second region A2 may extend from the first region A1 and be supported by or attached to the multi-joint hinge structure 413. For example, the second region A2 may extend along the slide-moving direction of the first structure 401, may be accommodated inside the second structure 402 together with the multi-joint hinge structure 413, and may be at least partially transformed into a curved-surface shape according to the deformation of the multi-joint hinge structure 413.

According to various embodiments, as the first structure 401 slides on the second structure 402, the area of the display 403, which is exposed to the outside, may vary. The electronic device 101 (e.g., a processor) may change the region of the display 403, which is activated based on the area of the display 403, which is exposed to the outside. For example, in the open state or in an intermediate position between the closed state and the open state, the electronic device 101 may activate a region among the entire area of the display 403, which is exposed to the outside of the second structure 402. In the closed state, the electronic device 101 may activate the first region A1 of the display 403 and deactivate the second region A2. In the closed state, if there is no user input for a predetermined period of time (e.g., 30 seconds or 2 minutes), the electronic device 101 may deactivate the entire region of the display 403. According to an embodiment, in a state where the entire region of display 403 is deactivated, as necessary (e.g., a notification according to user settings, a missed call notification/message arrival notification), the electronic device 101 may activate a partial region of the display 403 to provide visual information through the auxiliary display region (e.g., a portion of the second plate 421a and/or the rear plate 421b made of a light-transmitting material).

According to various embodiments, in the open state (e.g., the state illustrated in FIG. 3B), substantially, the entire region (e.g., the first region A1 and the second region A2) of the display 403 may be exposed to the outside, and the first region A1 and the second region A2 may be arranged while forming a flat surface. According to an embodiment, even in the open state, a part (e.g., one end) of the second region A2 may be positioned to correspond to the roller 451, and a portion of the second region A2, which corresponds to the roller 451, may be maintained in a curved-surface shape. For example, in various embodiments disclosed in the disclosure, even though it is mentioned that "in the open state, the second region A2 is disposed while forming a flat surface", a part of the second region A2 may be maintained in a curved-surface shape, and similarly thereto, even though it is mentioned that "in the closed state, the multi-joint hinge structure 413 and/or the second region A2 is accommodated inside the second structure 402", the multi-joint hinge structure 413 and/or a part of the second region A2 may be positioned outside the second structure 402.

According to various embodiments, a guide member, for example, the roller 451 may be rotatably mounted to the second structure 402 at a position adjacent to the edge of a side of the second structure 402 (e.g., the second plate 421a). For example, the roller 451 may be disposed adjacent to the edge (e.g., a portion indicated by reference number "IE") of the second plate 421a, which is parallel to the first side wall 423a. Although reference numbers in the drawings are not given, another side wall may extend from the edge of the second plate 421a, which is adjacent to the roller 451, and a side wall adjacent to the roller 451 may be substantially parallel to the first side wall 423a. As mentioned above, the side wall of the second structure 402, which is adjacent to the roller 451, may be made of a light-transmitting material, and a part of the second region A2 may provide visual information through a part of the second structure 402 in a state of being accommodated in the second structure 402.

According to various embodiments, one end of the roller 451 may be rotatably coupled to the second side wall 423b, and the other end thereof may be rotatably coupled to the third side wall 423c. For example, the roller 451 may be mounted to the second structure 402, and may rotate around the rotation axis R perpendicular to the slide-moving direction (e.g., the direction ① of an arrow in FIG. 3A or FIG. 3B) of the first structure 401. The rotation axis R may be disposed substantially parallel to the first side wall 423a, and for example, may be positioned at one edge of the second plate 421a to be far away from the first side wall 423a. According to an embodiment, the gap formed between the outer circumferential surface of the roller 451 and the inner surface of the edge of the second plate 421a may form an entrance allowing the multi-joint hinge structure 413 or display 403 to enter the inside of the second structure 402.

According to various embodiments, when the display 403 is transformed into a curved-surface shape, the roller 451 may be configured such that the display 403 maintains a predetermined radius of curvature, and thus may suppress excessive deformation of the display 403. "Excessive deformation" may mean that the display 403 is deformed to have an excessively small curvature radius which is small enough to damage a pixel or a signal wire included in the display 403. For example, the display 403 may be moved or deformed while being guided by the roller 451, and thus be protected from damage due to excessive deformation. According to an embodiment, the roller 451 may rotate while the multi-joint hinge structure 413 or the display 403 is inserted into the second structure 402 or withdrawn to the outside. For example, by suppressing the friction between the multi-joint hinge structure 413 (or the display 403) and the second structure 402, the multi-joint hinge structure 413 (or the display 403) may enable the second structure 402 to be smoothly inserted thereinto/withdrawn therefrom.

According to various embodiments, the support sheet 453 may be made of a material having flexibility and a predetermined degree of elasticity, for example, a material including an elastic body such as silicone or rubber, and may be mounted or attached to the roller 451 and thus be selectively wound as the roller 451 rotates. In the illustrated embodiment, multiple the support sheets (e.g., four) 453 may be arranged along the direction of the rotational axis R of the roller 451. For example, the multiple support sheets 453 may be mounted to the roller 451 while having predetermined gaps formed between adjacent support sheets 453, and may extend along a direction perpendicular to the axis rotation R. According to an embodiment, one support sheet may be mounted or attached to the roller 451. For example, one support sheet may have a size and shape corresponding to a region in which the support sheets 453 are arranged and a region between the support sheets 453 in FIG. 3C. In this way, the number, size, or shape of the support sheets 453 may be appropriately changed according to products to be actually manufactured. According to an embodiment, the support sheet 453, as the roller 451 rotates, may be wound around the outer circumferential surface of the roller 451 or unwound from the roller 451 to be unfolded in a flat-plate shape between the display 403 and the third plate 421c. According to an embodiment, the support sheet 453 may be referred to as a "support belt", an "auxiliary belt", a "support film", or a "auxiliary film".

According to various embodiments, the end of the support sheet 453 may be connected to the first structure 401, for example, the first plate 411a (e.g., a slide plate), and in the closed state (e.g., the state illustrated in FIG. 3A), the support sheet 453 may be wound around the roller 451. Accordingly, as the first plate 411a moves to the open state (e.g., the state illustrated in FIG. 3B), the support sheet 453 may be gradually positioned between the second structure 402 (e.g., the third plate 421c) and the display 403 (e.g., the second region A2), or positioned between the second structure 402 (e.g., the third plate 421c) and the multi-joint hinge structure 413. For example, the support sheet 453 may have at least a portion positioned to face the multi-joint hinge structure 413, and be selectively wound around the roller 451 according to the slide movement of the first plate 411a. The support sheet 453 may be generally positioned to be in contact with the multi-joint hinge structure 413, but a portion wound around the roller 451 may be substantially separated from the multi-joint hinge structure 413.

According to various embodiments, according to the extent in which the support sheet 453 is wound around the roller 451, the distance between the surface of the display 403 and the inner surface of the edge of the second plate 421a may be different. The smaller the arrangement gap is, the easier it is to prevent a foreign material from entering, but in case that the gap is too small, the display 403 may be in contact with or may rub against the second plate 421a. In case that direct contact or friction occurs, the surface of the display 403 may be damaged or the slide operation of the first structure 401 may be interrupted.

According to various embodiments, as the support sheet 453 is wound around the roller 451 in the closed state, a gap between the surface of the display 403 and the inner surface of the edge of the second plate 421a may be reduced while a state in which the surface of the display 403 is not in contact with the second plate 421a is maintained. For example, by reducing the arrangement gap in the closed state, it may be possible to prevent a foreign material from being introduced into the second structure 402. According to an embodiment, as the first structure 401 (e.g., the first plate 411a or a slide plate) gradually moves to the open state, the support sheet 453 may be unwound from the roller 451, and thus gradually move between the second structure 402 (e.g., the second plate 421a or the third plate 421c) and the multi-joint hinge structure 413. For example, as the first structure 401 moves to the open state, the arrangement gap may gradually increase to suppress direct friction or a touch between the display 403 and other structures (e.g., the second plate 421a), so that damage of the surface of the display 403 due to the friction or touch is prevented. According to an embodiment, the support sheet 453 may have a gradually increasing thickness as going from one end (e.g., a portion fixed to the roller 451) to the other end (e.g., a portion fixed to the first plate 411a) thereof. By using the thickness profile of the support sheet 453, the arrangement gap in the closed state and the open state may be adjusted.

According to various embodiments, the electronic device 101 may include at least one elastic member 431 or 433 be made of a low-density elastic body such as a sponge, or a brush. For example, the electronic device 101 may include a first elastic member 431 mounted to one end of the display 403, and according to an embodiment, may further include a second elastic member 433 mounted to the inner surface of an edge of the second plate 421a. The first elastic member 431 may be substantially disposed in the inner space of the second structure 402, and in the open state (e.g., the state illustrated in FIG. 3B), may be positioned to correspond to the edge of the second plate 421a. According to an embodiment, according to a slide movement of the first structure 401, the first elastic member 431 may move, in the inner space of the second structure 402. In case that the first structure 401 moves from the closed state to the open state, the first elastic member 431 may move toward the edge of the second plate 421a. In case that the first structure 401 reaches the open state, the first elastic member 431 may be in contact with the inner surface of the edge of the second plate 421a. For example, in the open state, the first elastic member 431 may seal the gap between the inner surface of the edge of the second plate 421a and the surface of the display 403. According to an embodiment, when moving from the closed state to the open state, the first elastic member 431 may move while being in contact with the second plate 421a (e.g., sliding contact). For example, if a foreign material has been introduced into the gap between the second region A2 and the second plate 421a in the closed state, when moving to the open state, the first elastic member 431 may discharge a foreign material to the outside of the second structure 402.

According to various embodiments, the second elastic member 433 may be attached to the inner surface of the edge of the second plate 421a, and may be disposed to substantially face the inner surface of the display 403. In the closed state, the gap (e.g., an arrangement gap) between the surface of the display 403 and the inner surface of the edge of the second plate 421a may be substantially determined by the second elastic member 433. According to an embodiment, in the closed state, the second elastic member 433 may be in contact with the surface of the display 403 to substantially seal the arrangement gap. According to an embodiment, the second elastic member 433 may be made of a low-density elastic body such as a sponge or a brush so as to prevent damage of the surface of the display 403 even in direct contact with the display 403. According to an embodiment, the arrangement gap may increase as the first structure 401 gradually moves to the open state. For example, the second region A2 of the display 403 may be gradually exposed to the outside of the second structure 402 without substantially touching or rubbing against the second elastic member 433. In case that the first structure 401 reaches the open state, the first elastic member 431 may be in contact with the second elastic member 433. For example, in the open state, the first elastic member 431 and the second elastic member 433 may seal the arrangement gap to block a foreign material from be introduced thereinto.

According to various embodiments, the electronic device 101 may further include a guide rail(s) 455 and/or an actuating member(s) 457. The guide rail(s) 455 may be mounted to the second structure 402, for example, the third plate 421c to guide a slide movement of the first structure 401 (e.g., the first plate 411a or a slide plate). The actuating member(s) 457 may include a spring or a spring module which provides an elastic force in a direction in which opposite ends thereof are far away from each other. One end of the actuating member(s) 457 may be rotatably supported by the second structure 402, and the other end may be rotatably supported by the first structure 401. When the first structure 401 slides and moves, opposite ends of the actuating member(s) 457 may be positioned to be closest to each other (hereinafter, referred to as a "closest point") at any point between the closed state and the open state. For example, in the section between the closest point and the closed state, the actuating member(s) 457 may provide an elastic force to the first structure 401 in the direction of moving toward the closed state, and in the section between the closest point and the open state, the actuating member(s) 457 may provide an elastic force to the first structure 401 in the direction of moving toward the open state.

FIG. 4A is a view showing a window member 500 including a single coating layer 520 disposed on a display 410 of an electronic device 101 according to various embodiments of the disclosure.

FIG. 4B is a view showing a window member 500 including multiple coating layers 520-1 and 520-2 having different hardnesses arranged on a display 410 of an electronic device 101 according to various embodiments of the disclosure.

Referring to FIG. 4A and FIG. 4B, the electronic device 101 may include a window member 500 and a display 410 (e.g., a flexible display). The configurations of the electronic device 101 in FIG. 4A and FIG. 4B may be totally or partially the same as the configurations of the electronic device 101 in FIG. 2A and/or FIG. 2B, and the configurations of the display 410 in FIG. 4A and FIG. 4B may be totally or partially the same as the configurations of the display 200 in FIG. 2A and/or the display 310 in FIG. 2B.

According to various embodiments, the window member 500 may be disposed on the display 410. According to an embodiment, the window member 500 may form at least a part of the outer surface of the electronic device 101. For example, the window member 500 may form at least a part of the front surface (e.g., the first surface 210a and the third surface 220a in FIG. 2A) of the electronic device 101. According to an embodiment, the window member 500 may cover at least a part of the display 410 and protect the display 410 from external impact. According to an embodiment, the display 410 may be visually exposed to the outside of the electronic device 101 through the window member 500. According to an embodiment, the display 410 may include the window member 500.

According to various embodiments, the window member 500 may include a glass member 510. The glass member 510 may be formed of a material which is substantially transparent and flexible. For example, at least a part of the glass member 510 may include glass (e.g., ultra-thin glass (UTG)) having a bendable thickness.

According to various embodiments, the glass member 510 may include multiple regions having different thicknesses and/or widths. For example, the glass member 510 may include at least one flat region 512 and at least one folding region 514 extending from the flat region 512. At least one flat region 512 included in the glass member 510 in FIG. 4A and FIG. 4B may correspond to at least a part of the first region 201 and/or the second region 202 included in the display 200 in FIG. 2B, and at least one folding region 514 included in the glass member 510 in FIG. 4A and FIG. 4B may correspond to the folding region 203 included in the display 200 in FIG. 2B. According to an embodiment, the flat region 512 may be one region of the glass member 510 having a substantially uniform thickness and/or width, and the folding region 514 may be another region of the glass member 510 having a thickness and/or a width different from those of the flat region 512. According to an embodiment, in case that the electronic device 101 is folded or rolled, the glass member 510 may be bent based on the folding region 514. According to an embodiment, when the electronic device 101 and/or the glass member 510 is manufactured, the flat region 512 and the folding region 514 may be bendable.

According to various embodiments, when at least a part of the electronic device 101 is folded, the flat region 512 may not be bent. According to an embodiment, the flat region 512 may face a foldable housing (e.g., the foldable housing 200a in FIG. 2A). For example, a first flat region 512a may face a first housing (e.g., the first housing structure 210 in FIG. 2A), and a second flat region 412b may face a second housing (e.g., the second housing structure 220 in FIG. 2A).

According to various embodiments, when the electronic device 101 is folded, the folding region 514 may be bendable. According to an embodiment, at least a part of the folding region 514 may face at least a part of a hinge structure (e.g., the hinge structure 340 in FIG. 2B).

According to various embodiments, the flat region 512 may include the multiple flat regions 512a and 512b. According to an embodiment, the flat region 512 may include the first flat region 512a and the second flat region 512b spaced apart from the first flat region 512a. The folding region 514 may be positioned between the multiple flat regions 512a and 512b. The first flat region 512a and the second flat region 512b may be arranged side by side. For example, the first flat region 512a and the second flat region 512b may be symmetric with reference to the folding region 514.

According to various embodiments, the folding region 514 may include multiple folding regions 514a, 514b, and 514c having different thicknesses and/or widths. According to an embodiment, the folding region 514 may include a second folding region 514b, a first folding region 514a extending from one end of the second folding region 514b, and a third folding region 514c extending from the other end of the second folding region 514b. The second folding region 514b may be positioned between the first folding region 514a and the third folding region 514c. According to an embodiment, a second thickness t2, which is the thickness of the second folding region 514b, may be substantially uniform while having a predetermined thickness, and a third thickness t3, which is the thickness of the first folding region 514a and/or third folding region 514c, may continuously decrease compared to the first thickness t1 which is the thickness of the flat regions 512a and 512b, and may increase continuously compared to second thickness t2. A structure, in which the thickness (e.g., the third thickness t3) of the folding region 512 changes continuously, may be defined as a structure in which the thickness changes gradually without mechanical steps or a concave-convex. For example, the surface of the folding region 514 may be formed substantially uniformly. According to various embodiments, at least a part of the folding region 514 of the glass member 510 may be formed using a chemical solution. For example, at least a part of the folding region 514 may include a recess 515 formed by a reaction with at least one of ammonium fluoride (NH₄F), sulfuric acid (H₂SO₄), nitric acid (HNO₃), fluorosilicic acid (H₂SIF₆), sodium hydroxide (NAOH), or hydrofluoric acid (HF).

According to various embodiments, the window member 500 may include a coating layer and/or a film layer (hereinafter, referred to as a coating layer) 520. According to an embodiment (e.g., FIG. 4A), the coating layer 520 may be a single coating layer. According to another embodiment (e.g., FIG. 4B), the coating layer 520 may include a high-hardness coating layer 520-1 and a low-hardness coating layer 520-2. According to an embodiment, the coating layer 520 may absorb at least a part of the force applied to the display 410 from inside the electronic device 101. According to an embodiment, a coating member and/or a film member of the coating layer 520 may include at least one of an optical clear adhesive (OCA) or an optical clear resin (OCR).

According to various embodiments, the coating layer 520 may be a single coating layer and may flatten at least a part of the window member 500. For example, the coating layer 520 may be positioned in the recess 515 of the folding region 514 to make the thickness and/or the width of the window member 500 uniform. For example, the sum of the thicknesses of the glass member 510 and the coating layer 520 may be substantially constant. According to an embodiment, at least a part of the coating layer 520 may be disposed under the glass member 510. For example, the coating layer 520 may include a first surface 420a facing the glass member 510 and a second surface 420b facing the display 410. The second surface 420b may be formed substantially flat, a surface of the first surface 420a, which faces the flat region 512, may be formed flat, and another surface of the first surface, which faces the folding region 514, may be formed to correspond to the shape of the folding region 514.

According to various embodiments, the coating layer 520 may include a first coating region 522 positioned below the flat region 512 and a second coating region 524 positioned below the folding region 514. The coating layer 520 may be formed in a shape corresponding to the shapes of the flat region 512 and the folding region 514. According to an embodiment, the first coating region 522 may include a (1-1)th coating region 522a disposed below the first flat region 512a and a (1-2)th coating region 522b disposed below the second flat region 512b, and the second coating region 524 may include a (2-1)th coating region 524a disposed below the first folding region 514a, a (2-2)th coating region 524b disposed below the second folding region 514b, and a (2-3)th coating region 524c disposed below the third folding region 514c. A thickness (e.g., the fourth thickness t4) of the first coating region 522 may be substantially uniform while having a predetermined thickness. A thickness (e.g., the fifth thickness t5) of the second coating region 524 may be greater than the thickness (e.g., the fourth thickness t4) of the first coating region 522. For example, a thickness (e.g., the fifth thickness t5) of the (2-2)th coating region 524b may be formed substantially uniformly while having a thickness greater than the fourth thickness t4, and a thicknesses (e.g., the sixth thickness t6) of the (2-1)th coating region 524a and the (2-3)th coating region 524c may increase continuously compared to the fourth thickness t4 of the first coating region 522, and decrease continuously compared to the fifth thickness t5 of the (2-2)th coating region 524b.

According to various embodiments, the coating layer 520 may include the high-hardness coating layer 520-1 and the low-hardness coating layer 520-2, and may flatten at least a part of the window member 500. For example, the high-hardness coating layer 520-1 may be positioned in the recess 515 of the folding region 514 and the low-hardness coating layer 520-2 may be positioned in the recess 516 of the fourth coating region 528, to uniformize the thickness and/or the width of the window member 500. For example, the sum of thicknesses of the glass member 510, the high-hardness coating layer 520-1, and the low-hardness coating layer 520-2 may be substantially constant. According to an embodiment, at least a part of the high-hardness coating layer 520-1 may be disposed under the glass member 510. For example, the high-hardness coating layer 520-1 may include the first surface 420a facing the glass member 510 and a third surface 420c facing the low-hardness coating layer 520-2. A surface of the first surface 420a, which faces the flat region 512, may be formed flat, and the other surface of the first surface, which faces the folding region 514, may be formed to correspond to the shape of the folding region 514. A surface of the third surface 420c, which faces a fifth coating region 527 of the low-hardness coating layer 520-2, may be formed flat, and the other surface thereof, which faces a sixth coating region 529 of the low-hardness coating layer 520-2, may be formed to correspond to the shape of the sixth coating region 529. According to an embodiment, at least a part of the low-hardness coating layer 520-2 may be disposed under the high-hardness coating layer 520-1. For example, the low-hardness coating layer 520-2 may include the third surface 420c facing the high-hardness coating layer 520-1 and the first surface 420a facing the display 410. The first surface 420a may be formed substantially flat. According to an embodiment, the thickness of the low-hardness coating layer 520-2 may be greater than the thickness of the high-hardness coating layer 520-1. For example, the thickness of the high-hardness coating layer 520-1 may be about 10 µm to 200 µm, and the thickness of the low-hardness coating layer 520-2 may be about 10 µm to 500 µm.

According to various embodiments, the high-hardness coating layer 520-1 may include a third coating region 526 positioned below the flat region 512 and a fourth coating region 528 positioned below the folding region 514. The high-hardness coating layer 520-1 may be formed in a shape corresponding to the shapes of the flat region 512 and the folding region 514. According to an embodiment, the third coating region 526 may include a (3-1)th coating region 526a disposed below the first flat region 512a and a (3-2)th coating region 526b disposed below the second flat region 512b, and the fourth coating region 528 may include a (4-1)th coating region 528a disposed below the first folding region 514a, a (4-2)th coating region 528b disposed below the second folding region 514b, and a (4-3)th coating region 528c disposed below the third folding region 514c. A thickness (e.g., the (4-1)th thickness t4-1) of the third coating region 526 may be substantially uniform while having a predetermined thickness. A thickness (e.g., the (5-1)th thickness t5-1) of the (4-2)th coating region 528b may be formed substantially uniformly, and the sum of the (5-1)th thickness t5-1 and the second thickness t2 may be substantially the same as the first thickness t1. A thickness (e.g., the (6-1)th thickness t6-1) of the (4-1)th coating region 528a and the (4-3)th coating region 528c may be substantially the same as subtracting the thickness (e.g., the (6-2)th thickness t6-2) of a (6-1)th coating region 529a and a (6-3)th coating region 529c described later from the sixth thickness t6.

According to various embodiments, the low-hardness coating layer 520-2 may include a fifth coating region 527 positioned below the third coating region 526 and a sixth coating region 529 positioned below the fourth coating region 528. The low-hardness coating layer 520-1 may be formed in a shape corresponding to the shapes of the third coating region 526 and the fourth coating region 528. According to an embodiment, the fifth coating region 527 may include a (5-1)th coating region 527a disposed below the (3-1)th coating region 526a and the (5-2)th coating region 527b disposed below the (3-2)th coating region 526b, and the sixth coating region 529 may include a (6-1)th coating region 529a disposed below the (4-1)th coating region 528a, a (6-2)th coating region (529b) disposed below the (4-2)th coating region 528b, and a (6-3)th coating region 529c disposed below the (4-3)th coating region 528c. A thickness (e.g., the (4-2)th thickness t4-2) of the fifth coating region 527 may be substantially uniform while having a predetermined thickness. A thickness (e.g., the (5-2)th thickness t5-2) of the sixth coating region 529 may be greater than the thickness (e.g., the (4-2)th thickness t4-2) of the fifth coating region 527. For example, a thickness (e.g., the (5-2)th thickness t5-2) of the (6-2)th coating region 529b may be formed substantially uniformly while having a thickness greater than the (4-2)th thickness t4-2, and a thickness (e.g., the (6-2)th thickness t6-2) of the (6-1)th coating region 529a and the (6-3)th coating region 529c may increase continuously compared to the (4-2)th thickness t4-2 of the fifth coating region 527 and may decrease continuously compared to the (5-2)th thickness t5-2 of the (6-2)th coating region 529b.

According to various embodiments, in order to secure visibility, a method of minimizing the interface caused by light reflection and minimizing visibility of a folding region through refractive index matching and transmittance matching may be considered. According to an embodiment, a processing ratio (ⓐ : ⓑ) of the distance ⓐ between the boundary between the first flat region 512a and the first folding region 514a and the boundary between the first folding region 514a and the second folding region 514b and the difference ⓑ between the thickness (e.g., the first thickness t1) of the first flat region 512a and the thickness (e.g., the second thickness t2) of the second folding region 514b may satisfy a predetermined ratio. For example, the processing ratio (ⓐ : ⓑ) may satisfy a ratio of about 40 : 3 to about 1000 : 1. According to an embodiment, the coating layer 520 may be coated on the entire lower region of the glass member 510. According to an embodiment, a difference in refractive index between the glass member 510 and the coating layer 520 may satisfy a predetermined value. For example, in case that the coating layer 520 is a single coating layer, a difference in refractive index between the glass member 510 and the coating layer 520 may be within about 0.13. In case that the coating layer 520 includes the high-hardness coating layer 520-1 and the low-hardness coating layer 520-2, a difference in refractive index between the glass member 510 and each of the coating layers 520-1 and 520-2 may be within about 0.13. As another example, in case that the coating layer 520 is a single coating layer, a difference in refractive index between the glass member 510 and the coating layer 520 may be about 0.1. In case that the coating layer 520 includes the high-hardness coating layer 520-1 and the low-hardness coating layer 520-2, a difference in refractive index between the glass member 510 and each of the coating layers 520-1 and 520-2 may be about 0.1. According to an embodiment, the transmittance of the coating member or the film member of the coating layer 520 may satisfy a predetermined percentage or higher. For example, the coating member or the film member of the coating layer 520 may have a transmittance of about 80% or greater. According to an embodiment, the second surface 420b of the coating layer 520, which faces the display 410, may be flat so that the surface roughness Ra thereof becomes less than a predetermined value. For example, in case that the coating layer 520 is a single coating layer, the surface roughness Ra of the second surface 420b of the coating layer 520 may be less than about 10 µm, and in case that the coating layer 520 includes the high-hardness coating layer 520-1 and the low-hardness coating layer 520-2, the surface roughness Ra of the second surface 420b of the low-hardness coating layer 520-2 may be less than about 10 µm.

According to various embodiments, the glass member 510 may have very low elongation. Therefore, in order to ensure durability thereof, a method of securing durability against repeated folding through an adhesive force and elongation with respect to tensile strain and a tensile force generated during folding may be considered. According to an embodiment, the adhesive force between the glass member 510 and the coating layer 520 may satisfy a predetermined value or greater. For example, the adhesive force between the glass member 510 and the coating layer 520 may be about 1 kgf/inch or greater. According to an embodiment, the elongation of the coating layer 520 may satisfy a predetermined percentage or higher. For example, the elongation of the coating layer 520 may be 3% or greater.

According to various embodiments, the thicknesses of the entire part of the window member 500 should be equal. Therefore, in order to implement a low repulsive force, a method of lowering the hardness of the coating layer 520 for compensating for the variable shape in the folding region 514 may be considered. According to an embodiment, a Shore hardness (Shore D) indicating the hardness of the coating layer 520 may satisfy a predetermined value or less. For example, in case that the coating layer 520 includes the high-hardness coating layer 520-1 and the low-hardness coating layer 520-2, the Shore D of the low-hardness coating layer 520-2 may be about 45 or less. According to an embodiment, in case that the coating layer 520 includes a high-hardness coating layer 520-1 and a low-hardness coating layer 520-2 and the high-hardness coating layer 520-1 is formed of multiple layers, patterns may be added between the multiple layers of the high-hardness coating layer 520-1.

According to various embodiments, the glass member 510 may be damaged by tensile strain. Therefore, in order to secure impact resistance, a method of minimizing tensile strain by disposing the high-hardness coating layer 520-1 under the glass member 510 and disposing the low-hardness coating layer 520-2 below the high-hardness coating layer 520-1 to absorb impact may be considered. According to an embodiment, in the coating layer 520 including the high-hardness coating layer 520-1 and the low-hardness coating layer 520-2, a Shore D indicating the hardness of the high-hardness coating layer 520-1 disposed between the glass member 510 and the low-hardness coating layer 520-2 may satisfy a predetermined value or greater. For example, in case that the high-hardness coating layer 520-1 includes one or multiple layers, each of the layers may have a Shore D of about 60 or greater.

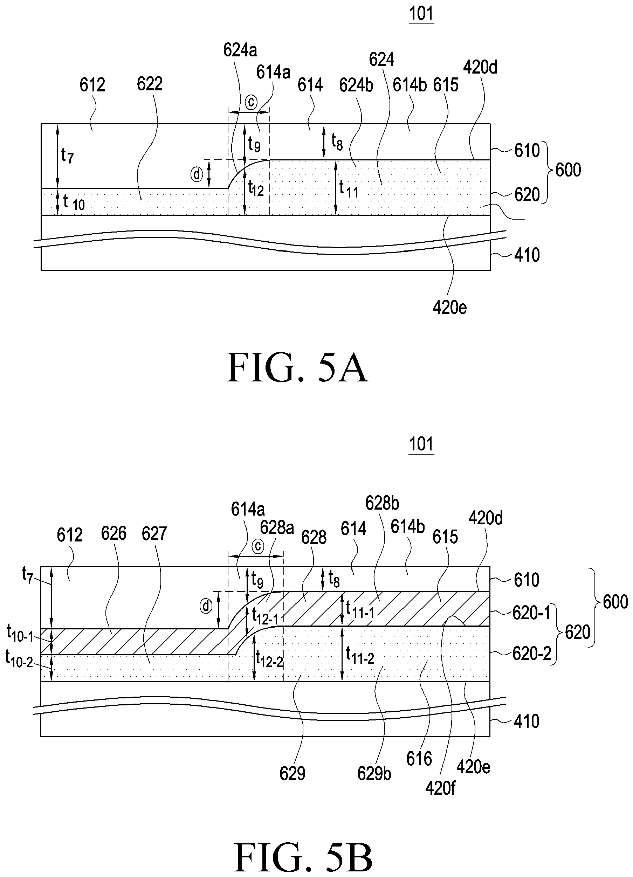

FIG. 5A is a view showing a window member 600 including a single coating layer 620 disposed on a display 410 of an electronic device 101 according to another embodiment of the disclosure.

FIG. 5B is a view showing a window member 600 including multiple coating layers 620-1 and 620-2 having different hardnesses arranged on a display 410 of an electronic device 101 according to another embodiment of the disclosure.

Referring to FIG. 5A and FIG. 5B, the electronic device 101 may include a window member 600 and a display 410 (e.g., a flexible display). The configurations of the electronic device 101 in FIG. 5A and FIG. 5B may be totally or partially the same as the configurations of the electronic device 101 in FIG. 3A to FIG. 3C, and the configurations of the display 410 in FIG. 5A and FIG. 5B may be totally or partially the same as the configurations of the display 403 in FIG. 3A to FIG. 3C.

According to various embodiments, the window member 600 may be disposed on the display 410. According to an embodiment, the window member 600 may form at least a part of the outer surface of the electronic device 101. For example, the window member 600 may form at least a part of the front surface (e.g., the first surface 411a in FIG. 3C) of the electronic device 101. According to an embodiment, the window member 600 may cover at least a part of the display 410 and protect the display 410 from external impact. According to an embodiment, the display 410 may be visually exposed to the outside of the electronic device 101 through the window member 600. According to an embodiment, the display 410 may include the window member 600.

According to various embodiments, the window member 600 may include a glass member 610. The glass member 610 may be formed of a material which is substantially transparent and flexible. For example, at least a part of the glass member 610 may include glass (e.g., ultra-thin glass (UTG) having a bendable thickness.

According to various embodiments, the glass member 610 may include multiple regions having different thicknesses and/or widths. For example, the glass member 610 may include a flat region 612 and at least one folding region 614 extending from the flat region 612. According to an embodiment, the flat region 612 may be one region of the glass member 610 having a substantially uniform thickness and/or width, and the folding region 614 may be another region of the glass member 610 having a thickness and/or a width different from those of the flat region 612. According to an embodiment, in case that the electronic device 101 is folded or rolled, the glass member 610 may be bent based on the folding region 614. According to an embodiment, when the electronic device 101 and/or the glass member 610 is manufactured, the flat region 612 and the folding region 614 may be bendable.

According to various embodiments, when the electronic device 101 is in the closed state, the flat region 612 may not be bendable. According to an embodiment, the flat region 612 may be seated in a first structure (e.g., the first structure 401 in FIG. 2A) of the electronic device 101.

According to various embodiments, when the electronic device 101 is in the closed state, the folding region 614 may be bendable. According to an embodiment, at least a part of the folding region 614 may be accommodated in a second structure (e.g., the second structure 402 in FIG. 2A) movably disposed in the first structure of the electronic device 101.

According to various embodiments, the folding region 614 may include multiple folding regions 614a and 614b having different thicknesses and/or widths. According to an embodiment, the folding region 614 may include a first folding region 614a and a second folding region 614b extending from one end of the first folding region 614a. The second folding region 614b may be positioned in a direction opposite to the flat region 612 with reference to the first folding region 614a. According to an embodiment, an eighth thickness t8, which is the thickness of the second folding region 614b, may be substantially uniform while having a predetermined thickness, and a ninth thickness t9, which is the thickness of the first folding region 614a, may decrease continuously compared to a seventh thickness t7 which is the thickness of the flat region 612, and may increase continuously compared to the eighth thickness t8. A structure, in which the thickness (e.g., the ninth thickness t9) of the folding region 612 changes continuously, may be defined as a structure in which the thickness changes gradually without mechanical steps or a concave-convex. For example, the surface of the folding region 614 may be formed substantially uniformly. According to various embodiments, at least a part of the folding region 614 of the glass member 610 may be formed using a chemical solution. For example, at least a part of the folding region 614 may include a recess 615 formed through a reaction with at least one of ammonium fluoride (NH₄F), sulfuric acid (H₂SO₄), nitric acid (HNO₃), fluorosilicic acid (H₂SIF₆), sodium hydroxide (NAOH), or hydrofluoric acid (HF).

According to various embodiments, the window member 600 may include a coating layer and/or a film layer (hereinafter, referred to as a coating layer) 620. According to an embodiment (e.g., FIG. 5A), the coating layer 620 may be a single coating layer. According to another embodiment (e.g., FIG. 5B), the coating layer 620 may include a high-hardness coating layer 620-1 and a low-hardness coating layer 620-2. According to an embodiment, the coating layer 620 may absorb at least a part of the force applied to the display 410 from inside the electronic device 101. According to an embodiment, a coating member and/or a film member of the coating layer 620 may include at least one of an optical clear adhesive (OCA) or an optical clear resin (OCR).

According to various embodiments, the coating layer 620 may be a single coating layer and may flatten at least a part of the window member 600. For example, the coating layer 620 may be positioned in the recess 615 of the folding region 614 to make the thickness and/or the width of the window member 600 uniform. For example, the sum of the thicknesses of the glass member 610 and the coating layer 620 may be substantially constant. According to an embodiment, at least a part of the coating layer 620 may be disposed under the glass member 610. For example, the coating layer 620 may include a fourth surface 420d facing the glass member 610 and a fifth surface 420e facing the display 410. The fifth surface 420e may be formed substantially flat, and a surface of the fourth surface 420d, which faces the flat region 612, may be formed flat, and another surface thereof facing the folding region 614 may be formed to correspond to the shape of the folding region 614.

According to various embodiments, the coating layer 620 may include a first coating region 622 positioned below the flat region 612 and a second coating region 624 positioned below the folding region 614. The coating layer 620 may be formed in a shape corresponding to the shapes of the flat region 612 and the folding region 614. According to an embodiment, the second coating region 624 may include a (2-1)th coating region 624a disposed below the first folding region 614a, and a (2-2)th coating region 624b disposed below the second folding region 614b. A thickness (e.g., the tenth thickness t10) of the first coating region 622 may be substantially uniform while having a predetermined thickness. A thickness (e.g., the eleventh thickness t11) of the second coating region 624 may be greater than the thickness (e.g., the tenth thickness t10) of the first coating region 622. For example, the thickness (e.g., the eleventh thickness t11) of the (2-2)th coating region 624b may be formed substantially uniformly while having a thickness greater than the tenth thickness t10, and the thicknesses (e.g., the twelfth thickness t12) of the (2-1)th coating region 624a may increase continuously compared to the tenth thickness t10 of the first coating region 622 and decrease continuously compared to the eleventh thickness t11 of the (2-2)th coating region 624b.

According to various embodiments, the coating layer 620 may include the high-hardness coating layer 620-1 and the low-hardness coating layer 620-2, and may flatten at least a part of the window member 600. For example, the high-hardness coating layer 620-1 may be positioned in the recess 615 of the folding region 614 and the low-hardness coating layer 620-2 may be positioned in the recess 616 of the fourth coating region 628, to uniformize the thickness and/or the width of the window member 600. For example, the sum of thicknesses of the glass member 610, the high-hardness coating layer 620-1, and the low-hardness coating layer 620-2 may be substantially constant. According to an embodiment, at least a part of the high-hardness coating layer 620-1 may be disposed under the glass member 610. For example, the high-hardness coating layer 620-1 may include a fourth surface 420d facing the glass member 610 and a sixth surface 420f facing the low-hardness coating layer 620-2. A surface of the fourth surface 420d, which faces the flat region 612, may be formed flat, and the other surface thereof, which faces the folding region 614, may be formed to correspond to the shape of the folding region 614. A surface of the sixth surface 420f, which faces a fifth coating region 627 of the low-hardness coating layer 620-2, may be formed flat, and the other surface thereof facing a sixth coating region 629 of the low-hardness coating layer 620-2 may be formed to correspond to the shape of the sixth coating region 629. According to an embodiment, at least a part of the low-hardness coating layer 620-2 may be disposed under the high-hardness coating layer 620-1. For example, the low-hardness coating layer 620-2 may include the sixth surface 420f facing the high-hardness coating layer 620-1 and the fifth surface 420e facing the display 410. The fifth surface 420e may be formed substantially flat. According to an embodiment, the thickness of the low-hardness coating layer 620-2 may be greater than the thickness of the high-hardness coating layer 620-1. For example, the thickness of the high-hardness coating layer 620-1 may be about 10 µm to 200 µm, and the thickness of the low-hardness coating layer 620-2 may be about 10 µm to 500 µm.

According to various embodiments, the high-hardness coating layer 620-1 may include a third coating region 626 positioned below the flat region 612 and a fourth coating region 628 positioned below the folding region 614. The high-hardness coating layer 620-1 may be formed in a shape corresponding to the shapes of the flat region 612 and the folding region 614. According to an embodiment, the fourth coating region 628 may include a (4-1)th coating region 628a disposed below the first folding region 614a, and a (4-2)th coating region 628b disposed below the second folding region 614b. A thickness (e.g., the (10-1)th thickness t10-1) of the third coating region 626 may be substantially uniform while having a predetermined thickness. A thickness (e.g., the (11-1)th thickness t11-1) of the (4-2)th coating region 628b may be formed substantially uniformly, and the sum of the eighth thickness t8 and the (11-1)th thickness t11-1 may be substantially the same as the seventh thickness t7. A thickness (e.g., the (12-1)th thickness t12-1) of the (4-1)th coating region 628a may be substantially the same as subtracting the thickness (e.g., the (12-2)th thickness t12-2) of a (6-1)th coating region 629a described later from the twelfth thickness t12.

According to various embodiments, the low-hardness coating layer 620-2 may include a fifth coating region 627 positioned below the third coating region 626 and a sixth coating region 629 positioned below the fourth coating region 628. The low-hardness coating layer 620-1 may be formed in a shape corresponding to the shapes of the third coating region 626 and the fourth coating region 628. According to an embodiment, the sixth coating region 629 may include a (6-1)th coating region 629a disposed below the (4-1)th coating region 628a, and a (6-2)th coating region 629b disposed below the (4-2)th coating region 628b. The thickness (e.g., the (10-2)th thickness t10-2) of the fifth coating region 627 may be substantially uniform while having a predetermined thickness. A thickness (e.g., the (11-2)th thickness t11-2) of the sixth coating region 629 may be greater than the thickness (e.g., the (10-2)th thickness t10-2) of the fifth coating region 627. For example, the thickness (e.g., the (11-2)th thickness 111-2) of the (6-2)th coating region 629b may be formed substantially uniformly while having a thickness greater than the (10-2)th thickness 110-2, and the thicknesses (e.g., the (12-2)th thickness t12-2) of the (6-1)th coating region 629a may increase continuously compared to the (10-2)th thickness t10-2 of the fifth coating region 627, and decrease continuously compared to the (11-2)th thickness t11-2 of the (6-2)th coating region 629b.

According to various embodiments, in order to secure visibility, a method of minimizing the interface caused by light reflection and minimizing visibility of a folding region through refractive index matching and transmittance matching may be considered. According to an embodiment, a processing ratio (ⓒ : ⓓ) of the distance ⓒ between the boundary between the first flat region 612 and the first folding region 614a and the boundary between the first folding region 614a and the second folding region 614b and the difference ⓓ between the thickness (e.g., the seventh thickness t7) of the first flat region 612 and the thickness (e.g., the eighth thickness t8) of the second folding region 614b may satisfy a predetermined ratio. For example, the processing ratio (ⓒ : ⓓ) may satisfy a ratio of about 40 : 3 to about 1000 : 1. According to an embodiment, the coating layer 620 may be coated on the entire lower region of the glass member 610. According to an embodiment, a difference in refractive index between the glass member 610 and the coating layer 620 may satisfy a predetermined value. For example, in case that the coating layer 620 is a single coating layer, a difference in refractive index between the glass member 610 and the coating layer 620 may be within about 0.13. In case that the coating layer 620 includes the high-hardness coating layer 620-1 and the low-hardness coating layer 620-2, a difference in refractive index between the glass member 610 and each of the coating layers 620-1 and 620-2 may be within about 0.13. As another example, in case that the coating layer 620 is a single coating layer, a difference in refractive index between the glass member 610 and the coating layer 620 may be about 0.1. In case that the coating layer 620 includes the high-hardness coating layer 620-1 and the low-hardness coating layer 620-2, a difference in refractive index between the glass member 610 and each of the coating layers 620-1 and 620-2 may be about 0.1. According to an embodiment, the transmittance of the coating member or the film member of the coating layer 620 may satisfy a predetermined percentage or higher. For example, the coating member or the film member of the coating layer 620 may have a transmittance of about 80% or greater. According to an embodiment, the fifth surface 420e of the coating layer 620, which faces the display 610, may be flat so that the surface roughness Ra thereof becomes less than a predetermined value. For example, in case that the coating layer 620 is a single coating layer, the surface roughness Ra of the fifth surface 420e of the coating layer 620 may be less than about 10 µm, and in case that the coating layer 620 includes the high-hardness coating layer 620-1 and the low-hardness coating layer 620-2, the surface roughness Ra of the fifth surface 420e of the low-hardness coating layer 620-2 may be less than about 10 µm.

According to various embodiments, the glass member 610 may have very low elongation. Therefore, in order to ensure durability thereof, a method of securing durability against repeated folding through adhesion and elongation with respect to tensile strain and a tensile force generated during folding may be considered. According to an embodiment, the adhesive force between the glass member 610 and the coating layer 620 may satisfy a predetermined value or greater. For example, the adhesive force between the glass member 610 and the coating layer 620 may be about 1 kgf/inch or greater. According to an embodiment, the elongation of the coating layer 620 may satisfy a predetermined percentage or higher. For example, the elongation of the coating layer 620 may be 3% or greater.

According to various embodiments, the thicknesses of the entire part of the window member 600 should be equal. In order to implement a low repulsive force, a method of lowering the hardness of the coating layer 620 for compensating for the variable shape in the folding region 614 may be considered. According to an embodiment, a Shore hardness (Shore D) indicating the hardness of the coating layer 620 may satisfy a predetermined value or less. For example, in case that the coating layer 620 includes the high-hardness coating layer 620-1 and the low-hardness coating layer 620-2, the Shore D of the low-hardness coating layer 620-2 may be about 45 or less. According to an embodiment, in case that the coating layer 620 includes a high-hardness coating layer 620-1 and a low-hardness coating layer 620-2 and the high-hardness coating layer 620-1 is formed of multiple layers, patterns may be added between the multiple layers of the high-hardness coating layer 620-1.

According to various embodiments, the glass member 610 may be damaged by tensile strain. In order to secure impact resistance, a method of minimizing tensile strain by disposing the high-hardness coating layer 620-1 under the glass member 610, and absorbing an impact by disposing the low-hardness coating layer 620-2 under the high-hardness coating layer 620-1 may be considered. According to an embodiment, in the coating layer 620 including the high-hardness coating layer 620-1 and the low-hardness coating layer 620-2, a Shore hardness (Shore D) indicating the hardness of the high-hardness coating layer 620-1 disposed between the glass member 610 and the low-hardness coating layer 620-2 may satisfy a predetermined value or greater. For example, in case that the high-hardness coating layer 620-1 includes one or multiple layers, each of the layers may have a Shore D of about 60 or greater.

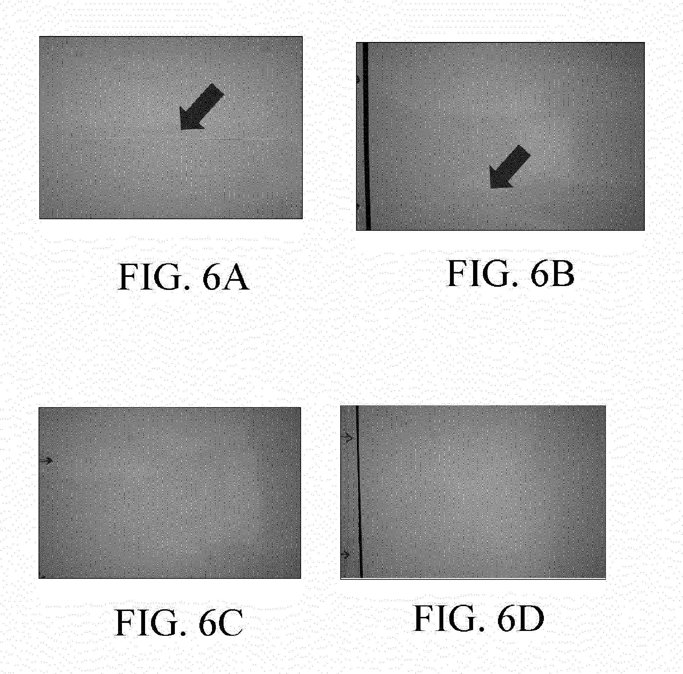

FIG. 6A and FIG. 6B are views showing the degree of visibility by a processing ratio according to a comparative embodiment, and FIG. 6C and FIG. 6D are views showing the degree of visibility by a processing ratio according to various embodiments of the disclosure.

Referring to FIG. 6A to FIG. 6D, it can be seen that the visibility changes in a first folding region (e.g., 524a in FIG. 4A and FIG. 4B and/or 624a in FIG. 5A and FIG. 5B) and/or a third folding region (e.g., 524c in FIG. 4A and FIG. 4B) according to the processing ratio (e.g., ⓐ : ⓑ and/or ⓒ : ⓓ) in the first folding region (e.g., 524a in FIG. 4A and FIG. 4B and/or 624a in FIG. 5A. and FIG. 5B) and/or the third folding region (e.g., 524c in FIG. 4A and FIG. 4B) of a glass member (e.g., 510 in FIG. 4A and FIG. 4B and/or 610 in FIG. 5A and FIG. 5B).

Referring to FIG. 6A to FIG. 6D, as the processing ratio in (e.g., ⓐ : ⓑ and/or ⓒ : ⓓ) in a first folding region (e.g., 524a in FIG. 4A and FIG. 4B and/or 624a in FIG. 5A and FIG. 5B) and/or a third folding region (e.g., 524c in FIG. 4A and FIG. 4B) of the glass member (e.g., 510 in FIG. 4A and FIG. 4B and/or 610 in FIG. 5A and FIG. 5B) increases, the contrast between the folding region (e.g., 524 in FIG. 4A and FIG. 4B and/or 624 in FIG. 5A and FIG. 5B) and the flat region (e.g., 522 in FIG. 4A and FIG. 4B and/or 622 in FIG. 5A and FIG. 5B may increase, and the visibility in the first folding region (e.g., 524a in FIG. 4A and FIG. 4B and/or 624a in FIG. 5A and FIG. 5B) and/or the third folding region (e.g., 524c in FIG. 4A and FIG. 4B) may decrease.

According to an embodiment (e.g., FIG. 6A), in case that the processing ratio in (e.g., ⓐ : ⓑ and/or ⓒ : ⓓ) in a first folding region (e.g., 524a in FIG. 4A and FIG. 4B and/or 624a in FIG. 5A and FIG. 5B) and/or a third folding region (e.g., 524c in FIG. 4A and FIG. 4B) of the glass member (e.g., 510 in FIG. 4A and FIG. 4B and/or 610 in FIG. 5A and FIG. 5B) is about 8 : 3, the contrast between the folding region (e.g., 524 in FIG. 4A and FIG. 4B and/or 624 in FIG. 5A and FIG. 5B) and the flat region (e.g., 522 in FIG. 4A and FIG. 4B and/or 622 in FIG. 5A and FIG. 5B may be about 65%, and the visibility in the first folding region (e.g., 524a in FIG. 4A and FIG. 4B and/or 624a in FIG. 5A and FIG. 5B) and/or the third folding region (e.g., 524c in FIG. 4A and FIG. 4B) may be relatively strong. According to an embodiment (e.g., FIG. 6B), in case that the processing ratio in (e.g., ⓐ : ⓑ and/or ⓒ : ⓓ) in a first folding region (e.g., 524a in FIG. 4A and FIG. 4B and/or 624a in FIG. 5A and FIG. 5B) and/or a third folding region (e.g., 524c in FIG. 4A and FIG. 4B) of the glass member (e.g., 510 in FIG. 4A and FIG. 4B and/or 610 in FIG. 5A and FIG. 5B) is about 10 : 3, the contrast between the folding region (e.g., 524 in FIG. 4A and FIG. 4B and/or 624 in FIG. 5A and FIG. 5B) and the flat region (e.g., 522 in FIG. 4A and FIG. 4B and/or 622 in FIG. 5A and FIG. 5B) may be about 90%, and the visibility in the first folding region (e.g., 524a in FIG. 4A and FIG. 4B and/or 624a in FIG. 5A and FIG. 5B) and/or the third folding region (e.g., 524c in FIG. 4A and FIG. 4B) may be relatively weak. According to an embodiment (e.g., FIG. 6C), in case that the processing ratio in (e.g., ⓐ : ⓑ and/or ⓒ : ⓓ) in a first folding region (e.g., 524a in FIG. 4A and FIG. 4B and/or 624a in FIG. 5A and FIG. 5B) and/or a third folding region (e.g., 524c in FIG. 4A and FIG. 4B) of the glass member (e.g., 510 in FIG. 4A and FIG. 4B and/or 610 in FIG. 5A and FIG. 5B) is about 40 : 3, the contrast between the folding region (e.g., 524 in FIG. 4A and FIG. 4B and/or 624 in FIG. 5A and FIG. 5B) and the flat region (e.g., 522 in FIG. 4A and FIG. 4B and/or 622 in FIG. 5A and FIG. 5B) may be about 99%, and the visibility in the first folding region (e.g., 524a in FIG. 4A and FIG. 4B and/or 624a in FIG. 5A and FIG. 5B) and/or the third folding region (e.g., 524c in FIG. 4A and FIG. 4B) may be invisible. According to an embodiment (e.g., FIG. 6D), in case that the processing ratio in (e.g., ⓐ : ⓑ and/or ⓒ : ⓓ) in a first folding region (e.g., 524a in FIG. 4A and FIG. 4B and/or 624a in FIG. 5A and FIG. 5B) and/or a third folding region (e.g., 524c in FIG. 4A and FIG. 4B) of the glass member (e.g., 510 in FIG. 4A and FIG. 4B and/or 610 in FIG. 5A and FIG. 5B) is about 180 : 3 (= 60 : 1), the contrast between the folding region (e.g., 524 in FIG. 4A and FIG. 4B and/or 624 in FIG. 5A and FIG. 5B) and the flat region (e.g., 522 in FIG. 4A and FIG. 4B and/or 622 in FIG. 5A and FIG. 5B) may be about 100%, and the visibility in the first folding region (e.g., 524a in FIG. 4A and FIG. 4B and/or 624a in FIG. 5A and FIG. 5B) and/or the third folding region (e.g., 524c in FIG. 4A and FIG. 4B) may be invisible.

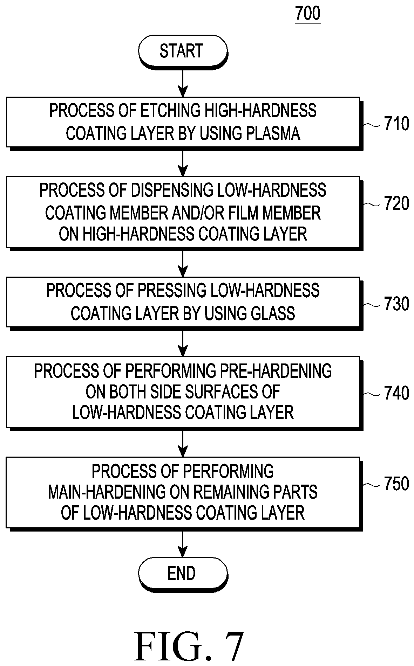

FIG. 7 is a flowchart for explaining a method for coating a low-hardness coating layer according to various embodiments of the disclosure.

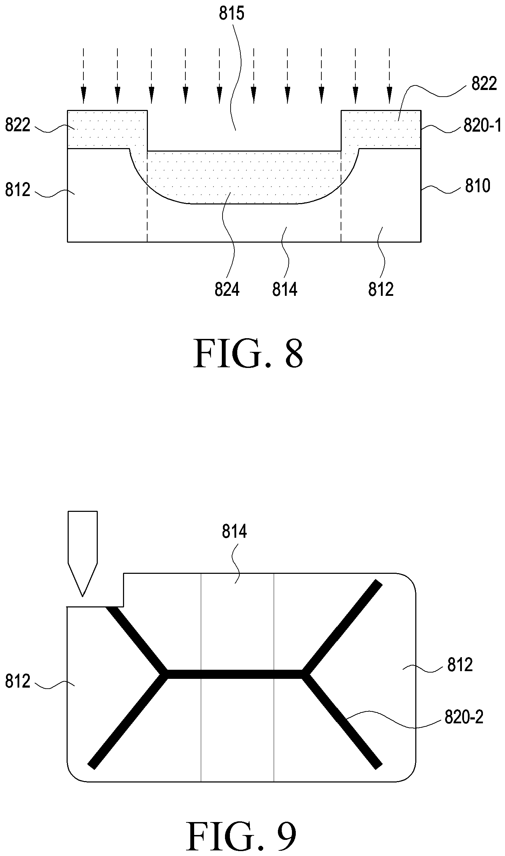

FIG. 8 is a view for explaining a process of etching a high-hardness coating layer disposed on a glass member by using plasma according to various embodiments of the disclosure.

FIG. 9 is a view for explaining a process of dispensing a low-hardness coating member on a high-hardness coating layer disposed on a glass member according to various embodiments of the disclosure.

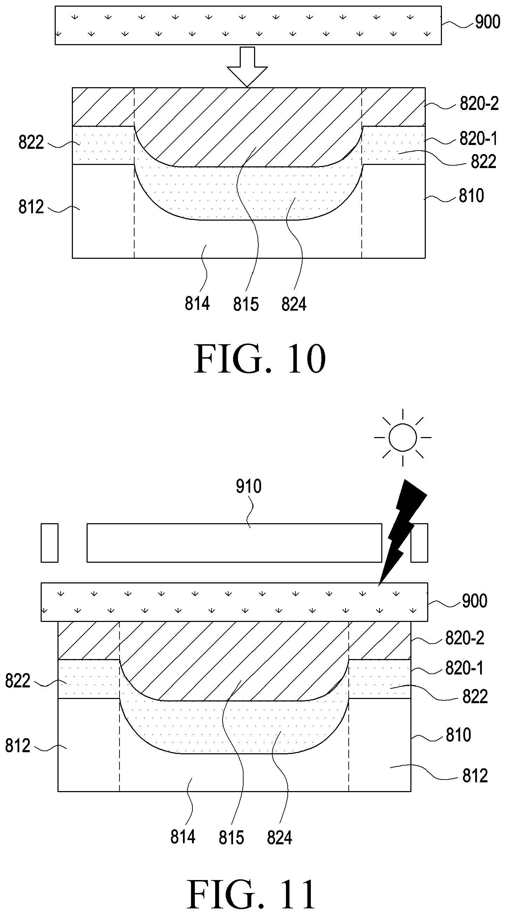

FIG. 10 is a view for explaining a process of pressing a low-hardness coating layer by using glass according to various embodiments of the disclosure.

FIG. 11 is a view for explaining a process of pre-hardening the side surfaces of a low-hardness coating layer according to various embodiments of the disclosure.

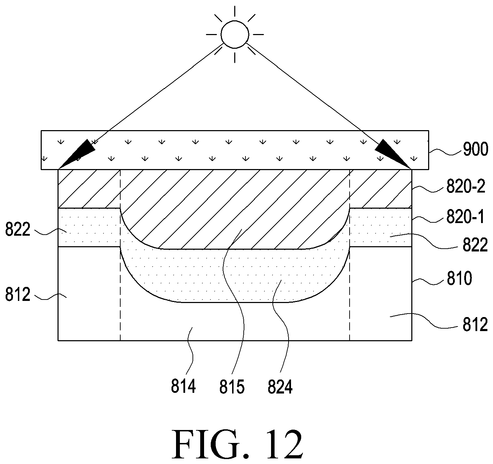

FIG. 12 is a view for explaining a process of main-hardening a low-hardness coating layer according to various embodiments of the disclosure.

Referring to FIG. 7 to FIG. 12, a method 700 for coating a low-hardness coating layer on a high-hardness coating layer disposed on a glass member may include a process 710 of etching the high-hardness coating layer by using plasma, a process 710 of dispensing a low-hardness coating member and/or a film member on the etched high-hardness coating layer, a process 730 of pressing the low-hardness coating layer disposed on the high-hardness coating layer by using glass, a process 740 of performing pre-hardening on both side surfaces of the low-hardness coating layer disposed on the high-hardness coating layer, and a process 750 of performing a main-hardening on the remaining parts except for both side surfaces of the low-hardness coating layer disposed on the high-hardness coating layer.

According to an embodiment, the configurations of a glass member 810, a high-hardness coating layer 820-1, a low-hardness coating layer 820-2, a flat region 812, a folding region 814, a seventh coating region 822, and an eighth coating region 824 in FIG. 8 to FIG. 12 may be totally or partially the same as the configurations of the glass member 510, the high-hardness coating layer 520-1, the low-hardness coating layer 520-2, the flat region 512, the folding region 514, the third coating region 526, and the fourth coating region 528 in FIG. 4B.

According to an embodiment, the configurations of a glass member 810, a high-hardness coating layer 820-1, a low-hardness coating layer 820-2, a flat region 812, a folding region 814, a seventh coating region 822, and an eighth coating region 824 in FIG. 8 to FIG. 12 may be totally or partially the same as the configurations of the glass member 610, the high-hardness coating layer 620-1, the low-hardness coating layer 620-2, the flat region 612, the folding region 614, the third coating region 626, and the fourth coating region 628 in FIG. 5B.

According to various embodiments, at least a part of the high-hardness coating layer 820-1 disposed on the glass member 810 may include a recess 815 formed through an etching process. According to an embodiment, a photosensitive member (not shown) may be dispensed to a surface of the high-hardness coating layer 820-1, which is opposite to a surface facing the glass member 810. For example, the photosensitive member may be a negative photosensitive member. According to an embodiment, plasma may be sprayed onto the surface of the high-hardness coating layer 820-1, to which the photosensitive member is dispensed and which is opposite to a surface facing the glass member 810 in a state where a mask (not shown) having a predetermined pattern is placed thereon. For example, the mask may have a pattern including a portion facing the seventh coating region 822 included in the high-hardness coating layer 820-1 and not including a portion facing the eighth coating region 824. According to an embodiment, the surface of the high-hardness coating layer 820-1, which is opposite to a surface facing the glass member 810, may be etched according to a predetermined pattern of the mask by the sprayed plasma. For example, the high-hardness coating layer 820-1 may include a recess 815 formed in the eighth coating region 624 by etching. According to an embodiment, at least a part of the recess 815 may have a substantially flat surface and have a uniform thickness. For example, at least a part of the recess 815 may have the same thickness as the seventh coating region 822 of the high-hardness coating layer 820-1. According to an embodiment, the photosensitive member remaining on the surface of the high-hardness coating layer 820-1, on which the recess 815 is formed and is opposite to a surface facing the glass member 810, may be removed.

According to various embodiments, a low-hardness coating member and/or film member may be dispensed onto the surface of the high-hardness coating layer 820-1, on which the recess 815 is formed and is opposite to a surface facing the glass member 810, so as to form the low-hardness coating layer 820-2. According to an embodiment, the low-hardness coating member and/or the film member may be dispensed in the recess 815 formed on the high-hardness coating layer 820-1. According to an embodiment, the low-hardness coating member and/or the film member may be dispensed in the recess 815 of the high-hardness coating layer 820-1, and then be evenly dispensed in the seventh coating region 822 and the eighth coating region 824 included in the high-hardness coating layer 820-1. According to an embodiment, the low-hardness coating member and/or the film member may include at least one of an OCA and an OCR.

According to various embodiments, a substantially flat surface may be formed on the low-hardness coating layer 820-2 formed by dispensing a low-hardness coating member and/or a film member on the high-hardness coating layer 820-1 by the press process. According to an embodiment, the low-hardness coating layer 820-2 may include a flat surface pressed using a glass 900 and thus formed to correspond to the surface of the glass 900. According to an embodiment, by using only the load including the glass 900 at the time of pressing, it may be possible to control the low-hardness coating member and/or the film member of the low-hardness coating layer 820-2 not to overflow. For example, in the press processing, the load may be less than 20 Kgf. According to an embodiment, by using the meniscus phenomenon at the time of pressing, it is possible to control the low-hardness coating layer 820-2 not to be over-coated. According to an embodiment, in case that the low-hardness coating member and/or the film member of the low-hardness coating layer 820-2 has overflowed during pressing, the size thereof may be controlled by punching the side surfaces thereof.

According to various embodiments, pre-hardening may be performed on both side surfaces of the low-hardness coating layer 820-2 after the press process. According to an embodiment, after the press process, an indurative resin may be dispensed on a surface of the glass 900 disposed on the low-hardness coating layer 820-2, which is opposite a surface facing the low-hardness coating layer 820-2. According to an embodiment, a mask 910 having a predetermined pattern may be disposed on the surface of the glass 900, on which the indurative resin is dispensed and which is opposite a surface facing the low-hardness coating layer 820-2. For example, the mask 910 may be designed to fit the outer perimeter of the glass 900 and may have a pattern which allows ultraviolet rays to pass through only the outer perimeter portion thereof. According to an embodiment, at least a part of the low-hardness coating layer 820-2 may be pre-hardened by emitting ultraviolet ways to the mask 910 by using an ultraviolet lamp. For example, since the mask 910 allows ultraviolet rays to pass through the outer perimeter portion of the glass 900, both side surfaces of the low-hardness coating layer 820-2, which correspond to the outer perimeter portion of the glass 900, may be pre-hardened by ultraviolet rays having passed along the outer perimeter portion of the glass 900.

According to various embodiments, after both side surfaces of the low-hardness coating layer 820-2 has been pre-hardened, main-hardening may be performed on the remaining portions of the low-hardness coating layer 820-2. According to an embodiment, the mask 910 disposed on the glass 900 may be removed after the pre-hardening is completed. According to an embodiment, after the mask 910 is removed, by making ultraviolet rays pass through the remaining portions except for the outer perimeter portion of the glass 900, the main-hardening may be performed on the corresponding portions of the low-hardness coating layer 820-2.

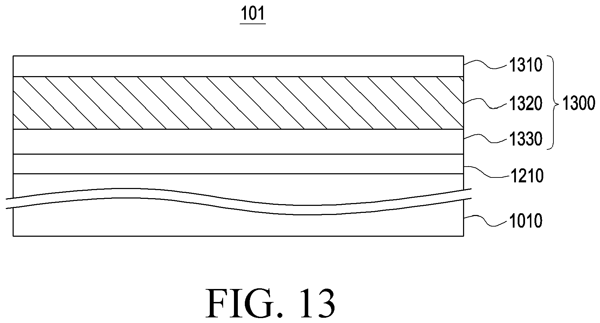

FIG. 13 is a view showing a glass member disposed on a display and a protective film disposed on a glass member of an electronic device 101 according to various embodiments of the disclosure.

Referring to FIG. 13, the electronic device 101 (e.g., the electronic device 101 in FIG. 1 to FIG. 3C) may include a display 1010, a glass member 1210, and a protective film 1300.

According to various embodiments, the glass member 1210 may be disposed on the display 1010 (e.g., a flexible display). According to an embodiment, the glass member 1210 may be formed of a material which is substantially transparent and flexible. For example, at least a part of the glass member 1210 may include glass (e.g., ultra-thin glass (UTG)) having a bendable thickness. According to an embodiment, the glass member 1210 may cover at least a part of the display 1010 and protect the display 1010 from external impact. According to an embodiment, the display 1010 may be visually exposed to the outside of the electronic device 101 through the glass member 1210. According to an embodiment, the display 1010 may include the glass member 1210.

According to various embodiments, the protective film 1300 may be disposed on the glass member 1210. According to an embodiment, the protective film 1300 may be disposed on the glass member 1210 to form at least a part of the outer surface of the electronic device 101 together with the glass member 1210. For example, the protective film 1300 may form at least a part of the front surface (e.g., the first surface 210a and the third surface 220a in FIG. 2A) of the electronic device 101. According to an embodiment, the protective film 1300 may cover at least a part of the glass member 1210, protect the glass member 1210, and have characteristics such as impact resistance, contamination resistance, scratch resistance, and abrasion resistance also. According to an embodiment, the protective film 1300 may be made of a substantially transparent material so that the display 1010 is visually exposed to the outside together with the glass member 1210.

According to various embodiments, the protective film 1300 may include a hard coating layer 1310. According to an embodiment, the hard coating layer 1310 may be positioned at the uppermost layer of the protective film 1300, and be made of indurative resin having characteristic such as contamination resistance, scratch resistance, and abrasion resistance. For example, the hard coating layer 1310 may be made of an indurative resin such as acrylic, silicone, or urethane. According to an embodiment, the hard coating layer 1310 may have a predetermined tensile elastic modulus and thickness. For example, the hard coating layer 1310 may have a tensile elastic modulus of about 10 MPa to 10⁵ MPa, and may have a thickness of about 1 µm to 100 µm.

According to various embodiments, the protective film 1300 may include a polymeric film layer 1320. According to an embodiment, the polymeric film layer 1320 may be positioned in the middle of the protective film 1300, and may be positioned between the hard coating layer 1310 and the glass member 1210. According to an embodiment, the polymeric film layer 1320 may be made of a substrate having a film form and using a thermoplastic polymer. For example, the polymeric film layer 1320 may be made of a substrate having a film form and using a resin such as PET, PI, PE, PMMA, PC, or PS. According to an embodiment, primer treatment using urethane, silicone, acrylic, etc. may be separately applied to the surface in which the polymeric film layer 1320 and the hard coating layer 1310 are in contact with each other, to improve an adhesive force with respect to the hard coating layer 1310. According to an embodiment, the polymeric film layer 1320 may have a predetermined elongation and tensile elastic modulus to demonstrate flexibility and folding properties. For example, the polymeric film layer 1320 may have an elongation of about 0.5% to 50%, and may have a tensile elastic modulus of about 10 MPa to 10⁵ MPa.

According to various embodiments, the protective film 1300 may include an adhesive layer 1330. According to an embodiment, the adhesive layer 1330 may be positioned at the lowermost layer of the protective film 1300 so that the polymeric layer 1320 and the glass member 1330 are bonded to each other. According to an embodiment, the adhesive layer 1330 may be made of an indurative resin hardened by UV light and heat. For example, the adhesive layer 1330 may be made of a resin such as acrylic, urethane, or silicone. According to an embodiment, the adhesive force, in which the adhesive layer 1330 is bonded to the glass member 1210, may satisfy a predetermined range to prevent the generation of peeling or bubbles therebetween even in case that the glass member 1210 is folded. For example, the adhesive force of the adhesive layer 1330 may be about 0.1 kgf/inch to 2.0 kgf/inch. According to an embodiment, the adhesive layer 1330 may satisfy a predetermined physical property to minimize deformation of the polymeric film layer 1320 due to external impact. For example, the adhesive layer may have a tensile elastic modulus of about 10⁻³ MPa to 10⁴ MPa, and may have a thickness of about 0.1 µm to 100 µm.

Although FIG. 13 shows that the protective film 1300 includes three layers including a hard coating layer 1310, a polymeric film layer 1320, and an adhesive layer 1330, the number of layers constituting the protective film 1300 is not limited thereto, and the protective film may include multiple layers three or more. For example, the protective film 1300 may further include a primer layer provided on each of the hard coating layer 1310 and the polymeric film layer 1320 in addition to the hard coating layer 1310, the polymeric film layer 1320, and the adhesive layer 1330.

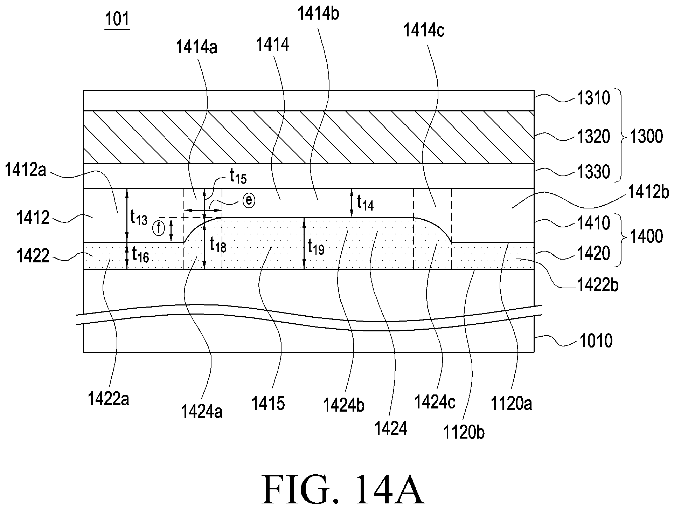

FIG. 14A is a view showing a window member including a single coating layer disposed on a display and a protective film disposed on the window member of the electronic device 101 according to various embodiments of the disclosure.

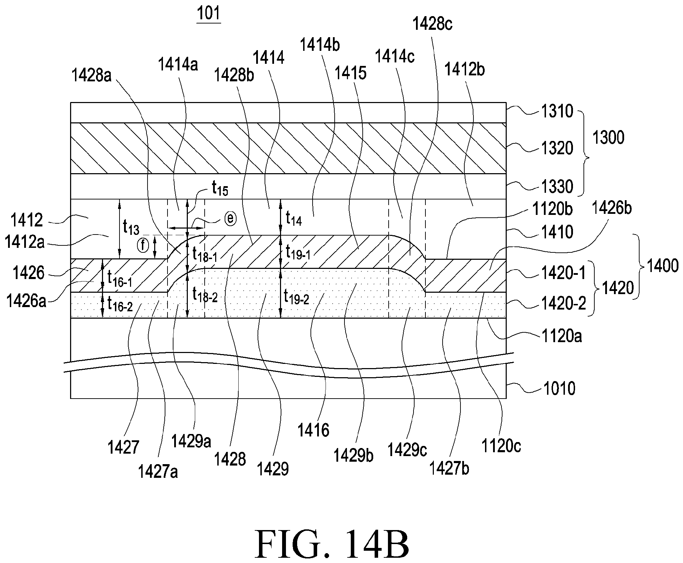

FIG. 14B is a view showing a window member including coating layers which are arranged on a display and have different hardnesses, and a protective film disposed on the window member of the electronic device 101 according to various embodiments of the disclosure.

Referring to FIG. 14A and FIG. 14B, the electronic device 101 may include a protective film 1300, a window member 1400, and a display 1010 (e.g., a flexible display). The configurations of the electronic device 101 in FIG. 14A and FIG. 14B may be totally or partially the same as the configurations of the electronic device 101 in FIG. 2A and/or FIG. 2B, and the configurations of the display 1010 in FIG. 14A and FIG. 14B may be totally or partially the same as the configurations of the display 200 in FIG. 2A and/or the display 310 in FIG. 2B.

According to various embodiments, the window member 1400 may be disposed on the display 1010. According to an embodiment, the window member 1400 may cover at least a part of the display 1010 and protect the display 1010 from external impact. According to an embodiment, the display 1010 may be visually exposed to the outside of the electronic device 101 through the window member 1400. According to an embodiment, the display 1010 may include the window member 1400.

According to various embodiments, the window member 1400 may include a glass member 1410. The glass member 1410 may be formed of a material which is substantially transparent and flexible. For example, at least a part of the glass member 1410 may include glass (e.g., ultra-thin glass (UTG)) having a bendable thickness.

According to various embodiments, the glass member 1410 may include multiple regions having different thicknesses and/or widths. For example, the glass member 1410 may include at least one flat region 1412 and at least one folding region 1414 extending from the flat region 1412. The at least one flat region 1412 included in the glass member 1410 in FIG. 14A and FIG. 14B may correspond to at least a part of the first region 201 and/or the second region 202 included in the display 200 in FIG. 2B, and the at least one folding region 1414 included in the glass member 1410 in FIG. 14A and FIG. 14B may correspond to the folding region 203 included in the display 200 in FIG. 2B. According to an embodiment, the flat region 1412 may be one region of the glass member 1410 having a substantially uniform thickness and/or width, and the folding region 1414 may be another region of the glass member 1410 having a thickness and/or a width different from those of the flat region 1412. According to an embodiment, in case that the electronic device 101 is folded or rolled, the glass member 1410 may be bent based on the folding region 1414. According to an embodiment, when the electronic device 101 and/or the glass member 1410 is manufactured, the flat region 1412 and the folding region 1414 may be bendable.

According to various embodiments, when at least a part of the electronic device 101 is folded, the flat region 1412 may not be bendable. According to an embodiment, the flat region 1412 may face a foldable housing (e.g., the foldable housing 200a in FIG. 2A). For example, the first flat region 1412a may face a first housing (e.g., the first housing structure 210 in FIG. 2A), and the second flat region 1412b may face a second housing (e.g., the second housing structure 220 in FIG. 2A).

According to various embodiments, when the electronic device 101 is folded, the folding region 514 may be bendable. According to an embodiment, at least a part of the folding region 1414 may face at least a part of a hinge structure (e.g., the hinge structure 340 in FIG. 2B).

According to various embodiments, the flat region 1412 may include the multiple flat regions 1412a and 1412b. According to an embodiment, the flat region 1412 may include a first flat region 1412a and a second flat region 1412b spaced apart from the first flat region 1412a. The folding region 1414 may be positioned between the multiple flat regions 1412a and 1412b. The first flat region 1412a and the second flat region 1412b may be arranged side by side. For example, the first flat region 1412a and the second flat region 1412b may be symmetric with respect to the folding region 1414.

According to various embodiments, the folding region 1414 may include multiple folding regions 1414a, 1414b, and 1414c having different thicknesses and/or widths. According to an embodiment, the folding region 1414 may include a second folding region 1414b, a first folding region 1414a extending from one end of the second folding region 1414b, and a third folding region 1414c extending from the other end of the second folding region 1414b. The second folding region 1414b may be positioned between the first folding region 1414a and the third folding region 1414c. According to an embodiment, a fourteenth thickness t14, which is the thickness of the second folding region 1414b, may be substantially uniform while having a predetermined thickness, and a fifteenth thickness t15, which is the thickness of the first folding region 1414a and/or third folding region 1414c, may decrease continuously compared to the thirteenth thickness t13, which is the thickness of the flat regions 1412a and 1412b, and may increase continuously compared to fourteenth thickness t14. A structure, in which the thickness (e.g., the fifteen thickness t15) of the folding region 1412 changes continuously, may be defined as a structure in which the thickness changes gradually without mechanical steps or a concave-convex. For example, the surface of the folding region 1414 may be formed substantially uniformly. According to various embodiments, at least a part of the folding region 1414 of the glass member 1410 may be formed using a chemical solution. For example, at least a part of the folding region 1414 may include a recess 515 formed through a reaction with at least one of ammonium fluoride (NH₄F), sulfuric acid (H₂SO₄), nitric acid (HNO₃), fluorosilicic acid (H₂SIF₆), sodium hydroxide (NAOH), or hydrofluoric acid (HF).

According to various embodiments, the window member 1400 may include a coating layer and/or a film layer (hereinafter, referred to as a coating layer) 1420. According to an embodiment (e.g., FIG. 14A), the coating layer 1420 may be a single coating layer. According to another embodiment (e.g., FIG. 14B), the coating layer 1420 may include a high-hardness coating layer 1420-1 and a low-hardness coating layer 1420-2. According to an embodiment, the coating layer 1420 may absorb at least a part of the force applied to the display 1010 from inside the electronic device 101. According to an embodiment, a coating member and/or a film member of the coating layer 1420 may include at least one of an optical clear adhesive (OCA) or an optical clear resin (OCR).

According to various embodiments, the coating layer 1420 may be a single coating layer and may flatten at least a part of the window member 1400. For example, the coating layer 1420 may be positioned in the recess 1415 of the folding region 1414 to make the thickness and/or the width of the window member 1400 uniform. For example, the sum of the thicknesses of the glass member 1410 and the coating layer 1420 may be substantially constant. According to an embodiment, at least a part of the coating layer 1420 may be disposed under the glass member 1410. For example, the coating layer 1420 may include a first surface 1120a facing the glass member 1410 and a second surface 1120b facing the display 1010. The second surface 1120b may be formed substantially flat, and a surface of the first surface 1120a, which faces the flat region 1412, may be formed flat, and another surface of the first surface 420a, which faces the folding region 1414, may be formed to correspond to the shape of the folding region 1414.

According to various embodiments, the coating layer 1420 may include a first coating region 1422 positioned below the flat region 1412 and a second coating region 1424 positioned below the folding region 1414. The coating layer 1420 may be formed in a shape corresponding to the shapes of the flat region 1412 and the folding region 1414. According to an embodiment, the first coating region 1422 may include a (1-1)th coating region 1422a disposed below the first flat region 1412a and a (1-2)th coating region 1422b disposed below the second flat region 1412b, and the second coating region 1424 may include a (2-1)th coating region 1424a disposed below the first folding region 1414a, a (2-2)th coating region 1424b disposed below the second folding region 1414b, and a (2-3)th coating region 1424c disposed below the third folding region 1414c. A thickness (e.g., the sixteenth thickness t16) of the first coating region 1422 may be substantially uniform while having a predetermined thickness. A thickness (e.g., the seventeenth thickness t17) of the second coating region 1424 may be greater than the thickness (e.g., the sixteenth thickness t16) of the first coating region 1422. For example, a thickness (e.g., the seventh thickness t17) of the (2-2)th coating region 1424b may be formed substantially uniformly while having a thickness greater than the sixteenth thickness t16, and a thicknesses (e.g., the eighteenth thickness t18) of the (2-1)th coating region 1424a and the (2-3)th coating region 1424c may increase continuously compared to the sixteenth thickness t16 of the first coating region 1422, and decrease continuously compared to the seventeenth thickness t17 of the (2-2)th coating region 1424b.

According to various embodiments, the coating layer 1420 may include the high-hardness coating layer 1420-1 and the low-hardness coating layer 1420-2, and may flatten at least a part of the window member 1400. For example, the high-hardness coating layer 1420-1 may be positioned in the recess 1415 of the folding region 1414 and the low-hardness coating layer 1420-2 may be positioned in the recess 1416 of the fourth coating region 1428, to uniformize the thickness and/or the width of the window member 1400. For example, the sum of thicknesses of the glass member 1410, the high-hardness coating layer 1420-1, and the low-hardness coating layer 1420-2 may be substantially constant. According to an embodiment, at least a part of the high-hardness coating layer 1420-1 may be disposed under the glass member 1410. For example, the high-hardness coating layer 1420-1 may include the first surface 1020a facing the glass member 1410 and a third surface 1120c facing the low-hardness coating layer 1420-2. A surface of the first surface 1120a, which faces the flat region 1412, may be formed flat, and the other surface of the first surface 420a, which faces the folding region 1414, may be formed to correspond to the shape of the folding region 1414. A surface of the third surface 1120c, which faces a fifth coating region 1427 of the low-hardness coating layer 1420-2, may be formed flat, and the other surface thereof, which faces a sixth coating region 1429 of the low-hardness coating layer 1420-2, may be formed to correspond to the shape of the sixth coating region 1429. According to an embodiment, at least a part of the low-hardness coating layer 1420-2 may be disposed under the high-hardness coating layer 1420-1. For example, the low-hardness coating layer 1420-2 may include the third surface 1120c facing the high-hardness coating layer 1420-1, and the first surface 1120a facing the display 1010. The first surface 1120a may be formed substantially flat. According to an embodiment, the thickness of the low-hardness coating layer 1420-2 may be greater than the thickness of the high-hardness coating layer 1420-1. For example, the thickness of the high-hardness coating layer 1420-1 may be about 10 µm to 200 µm, and the thickness of the low-hardness coating layer 1420-2 may be about 10 µm to 500 µm.

According to various embodiments, the high-hardness coating layer 1420-1 may include a third coating region 1426 positioned below the flat region 1412 and a fourth coating region 1428 positioned below the folding region 1414. The high-hardness coating layer 1420-1 may be formed in a shape corresponding to the shapes of the flat region 1412 and the folding region 1414. According to an embodiment, the third coating region 1426 may include a (3-1)th coating region 1426a disposed below the first flat region 1412a and a (3-2)th coating region 1426b disposed below the second flat region 1412b, and the fourth coating region 1428 may include a (4-1)th coating region 1428a disposed below the first folding region 1414a, a (4-2)th coating region 1428b disposed below the second folding region 1414b, and a (4-3)th coating region 1428c disposed below the third folding region 1414c. A thickness (e.g., the (16-1)th thickness t16-1) of the third coating region 1426 may be substantially uniform while having a predetermined thickness. A thickness (e.g., the (17-1)th thickness t17-1) of the (4-2)th coating region 1428b may be formed substantially uniformly, and the sum of the (17-1)th thickness t17-1 and the fourteenth thickness t14 may be substantially the same as the thirteenth thickness t13. A thickness (e.g., the (18-1)th thickness t18-1) of the (4-1)th coating region 1428a and the (4-3)th coating region 1428c may be substantially the same as subtracting the thickness (e.g., the (18-2)th thickness t18-2) of a (6-1)th coating region 1429a and a (6-3)th coating region 1429c described later from the eighteenth thickness t18.

According to various embodiments, the low-hardness coating layer 1420-2 may include a fifth coating region 1427 positioned below the third coating region 1426 and a sixth coating region 1429 positioned below the fourth coating region 1428. The low-hardness coating layer 1420-1 may be formed in a shape corresponding to the shapes of the third coating region 1426 and the fourth coating region 1428. According to an embodiment, the fifth coating region 1427 may include a (5-1)th coating region 1427a disposed below the (3-1)th coating region 1426a and a (5-2)th coating region 1427b disposed below the (3-2)th coating region 1426b, and the sixth coating region 1429 may include a (6-1)th coating region 1429a disposed below the (4-1)th coating region 1428a, a (6-2)th coating region (1429b) disposed below the (4-2)th coating region 1428b, and a (6-3)th coating region 1429c disposed below the (4-3)th coating region 1428c. The thickness (e.g., the (16-2)th thickness t16-2) of the fifth coating region 1427 may be substantially uniform while having a predetermined thickness. A thickness (e.g., the (17-2)th thickness t17-2) of the sixth coating region 1429 may be greater than the thickness (e.g., the (16-2)th thickness t16-2) of the fifth coating region 1427. For example, the thickness (e.g., the (17-2)th thickness t17-2) of the (6-2)th coating region 1429b may be formed substantially uniformly while having a thickness greater than the (16-2)th thickness t16-2, and the thicknesses (e.g., the (18-2)th thickness t18-2) of the (6-1)th coating region 1429a and the (6-3)th coating region 1429c may increase continuously compared to the (16-2)th thickness t16-2 of the fifth coating region 1427, and decrease continuously compared to the (17-2)th thickness t17-2 of the (6-2)th coating region 1429b.

According to various embodiments, in order to secure visibility, a method of minimizing the interface caused by light reflection and minimizing visibility of a folding region through refractive index matching and transmittance matching may be considered. According to an embodiment, a processing ratio ((e) : ⓕ) of the distance (e) between the boundary between the first flat region 1412a and the first folding region 1414a and the boundary between the first folding region 1414a and the second folding region 1414b and the difference ⓕ between the thickness (e.g., the thirteenth thickness t13) of the first flat region 1412a and the thickness (e.g., the fourteenth thickness t14) of the second folding region 1414b may satisfy a predetermined ratio. For example, the processing ratio (ⓔ : ⓕ) may satisfy a ratio of about 40 : 3 to about 1000 : 1. According to an embodiment, the coating layer 1420 may be coated on the entire lower region of the glass member 1410. According to an embodiment, a difference in refractive index between the glass member 1410 and the coating layer 1420 may satisfy a predetermined value. For example, in case that the coating layer 1420 is a single coating layer, a difference in refractive index between the glass member 1410 and the coating layer 1420 may be within about 0.13. In case that the coating layer 1420 includes the high-hardness coating layer 1420-1 and the low-hardness coating layer 1420-2, a difference in refractive index between the glass member 1410 and each of the coating layers 1420-1 and 1420-2 may be within about 0.13. As another example, in case that the coating layer 1420 is a single coating layer, a difference in refractive index between the glass member 1410 and the coating layer 1420 may be about 0.1. In case that the coating layer 1420 includes the high-hardness coating layer 1420-1 and the low-hardness coating layer 1420-2, a difference in refractive index between the glass member 1410 and each of the coating layers 1420-1 and 1420-2 may be about 0.1. According to an embodiment, the transmittance of the coating member or the film member of the coating layer 1420 may satisfy a predetermined percentage or higher. For example, the coating member or the film member of the coating layer 1420 may have a transmittance of about 80% or greater. According to an embodiment, the second surface 1120b of the coating layer 1420, which faces the display 1010, may be flat so that the surface roughness Ra thereof becomes less than a predetermined value. For example, in case that the coating layer 1420 is a single coating layer, the surface roughness Ra of the second surface 1120b of the coating layer 1420 may be less than about 10 µm, and in case that the coating layer 1420 includes the high-hardness coating layer 1420-1 and the low-hardness coating layer 1420-2, the surface roughness Ra of the second surface 1120b of the low-hardness coating layer 1420-2 may be less than about 10 µm.

According to various embodiments, the glass member 1410 may have very low elongation. Therefore, in order to ensure durability thereof, a method of securing durability against repeated folding through adhesion and elongation with respect to tensile strain and a tensile force generated during folding may be considered. According to an embodiment, the adhesive force between the glass member 1410 and the coating layer 1420 may satisfy a predetermined value or greater. For example, the adhesive force between the glass member 1410 and the coating layer 1420 may be about 1 kgf/inch or greater. According to an embodiment, the elongation of the coating layer 1420 may satisfy a predetermined percentage or higher. For example, the elongation of the coating layer 1420 may be 3% or greater.

According to various embodiments, the thicknesses of the entire part of the window member 1400 should be equal. In order to implement a low repulsive force, a method of lowering the hardness of the coating layer 1420 for compensating for the variable shape in the folding region 1414 may be considered. According to an embodiment, a Shore hardness (Shore D) indicating the hardness of the coating layer 1420 may satisfy a predetermined value or less. For example, in case that the coating layer 1420 includes the high-hardness coating layer 1420-1 and the low-hardness coating layer 1420-2, the shore hardness of the low-hardness coating layer 1420-2 may be about 45 or less. According to an embodiment, in case that the coating layer 1420 includes a high-hardness coating layer 1420-1 and a low-hardness coating layer 1420-2 and the high-hardness coating layer 1420-1 is formed of multiple layers, patterns may be added between the multiple layers of the high-hardness coating layer 1420-1.

According to various embodiments, the glass member 1410 may be damaged by tensile strain. In order to secure impact resistance, a method of minimizing tensile strain by disposing the high-hardness coating layer 1420-1 under the glass member 1410, and absorbing impact by disposing the low-hardness coating layer 1420-2 under the high-hardness coating layer 1420-1 may be considered. According to an embodiment, in the coating layer 1420 including the high-hardness coating layer 1420-1 and the low-hardness coating layer 1420-2, a Shore hardness (Shore D) indicating the hardness of the high-hardness coating layer 1420-1 disposed between the glass member 1410 and the low-hardness coating layer 1420-2 may satisfy a predetermined value or greater. For example, in case that the high-hardness coating layer 1420-1 includes one or multiple layers, each of the layers may have a Shore hardness of about 60 or greater.

According to various embodiments, the protective film 1300 may be disposed on the window member 1400. According to an embodiment, the protective film 1300 may be disposed on the window member 1400 to form at least a part of the outer surface of the electronic device 101 together with the window member 1400. For example, the protective film 1300 may form at least a part of the front surface (e.g., the first surface 210a and the third surface 220a in FIG. 2A) of the electronic device 101. According to an embodiment, the protective film 1300 may cover at least a part of the window member 1400, protect the window member 1400, and have characteristics such as impact resistance, contamination resistance, scratch resistance, and abrasion resistance also. According to an embodiment, the protective film 1300 may be made of a substantially transparent material so that the display 1010 is visually exposed to the outside together with the window member 1400.

According to various embodiments, the protective film 1300 may include a hard coating layer 1310. According to an embodiment, the hard coating layer 1310 may be positioned at the uppermost layer of the protective film 1300, and be made of indurative resin having characteristic such as contamination resistance, scratch resistance, and abrasion resistance. For example, the hard coating layer 1310 may be made of an indurative resin such as acrylic, silicone, or urethane. According to an embodiment, the hard coating layer 1310 may have a predetermined tensile elastic modulus and thickness. For example, the hard coating layer 1310 may have a tensile elastic modulus of about 10 MPa to 10⁵ MPa, and may have a thickness of about 1 µm to 100 µm.

According to various embodiments, the protective film 1300 may include a polymeric film layer 1320. According to an embodiment, the polymeric film layer 1320 may be positioned in the middle of the protective film 1300, and may be positioned between the hard coating layer 1310 and the window member 1400. According to an embodiment, the polymeric film layer 1320 may be made of a substrate having a film form and using a thermoplastic polymer. For example, the polymeric film layer 1320 may be made of a substrate having a film form and using a resin such as PET, PI, PE, PMMA, PC, or PS. According to an embodiment, primer treatment using urethane, silicone, acrylic, etc. may be separately applied to the surface in which the polymeric film layer 1320 and the hard coating layer 1310 are in contact with each other, to improve an adhesive force with respect to the hard coating layer 1310. According to an embodiment, the polymeric film layer 1320 may have a predetermined elongation and tensile elastic modulus to demonstrate flexibility and folding properties. For example, the polymeric film layer 1320 may have an elongation of about 0.5% to 50%, and may have a tensile elastic modulus of about 10 MPa to 10⁵ MPa.

According to various embodiments, the protective film 1300 may include an adhesive layer 1330. According to an embodiment, the adhesive layer 1330 may be positioned at the lowermost layer of the protective film 1300 so that the polymer layer 1320 and the window member 1400 are bonded to each other. According to an embodiment, the adhesive layer 1330 may be made of an indurative resin hardened by UV light and heat. For example, the adhesive layer 1330 may be made of a resin such as acrylic, urethane, or silicone. According to an embodiment, the adhesive force, in which the adhesive layer 1330 is bonded to the window member 1400, may satisfy a predetermined range to prevent the generation of peeling or bubbles therebetween even in case that the window member 1400 is folded. For example, the adhesive force of the adhesive layer 1330 may be about 0.1 kgf/inch to 2.0 kgf/inch. According to an embodiment, the adhesive layer 1330 may satisfy a predetermined physical property to minimize deformation of the polymeric film layer 1320 due to external impact. For example, the adhesive layer may have a tensile elastic modulus of about 10⁻³ MPa to 10⁴ MPa, and may have a thickness of about 0.1 µm to 100 µm.

Although FIG. 14A and FIG. 14B shows that the protective film 1300 includes three layers including a hard coating layer 1310, a polymer film layer 1320, and an adhesive layer 1330, the number of layers constituting the protective film 1300 is not limited thereto, and the protective film may include multiple layers three or more. For example, the protective film 1300 may further include a primer layer provided on each of the hard coating layer 1310 and the polymer film layer 1320 in addition to the hard coating layer 1310, the polymeric film layer 1320, and the adhesive layer 1330.

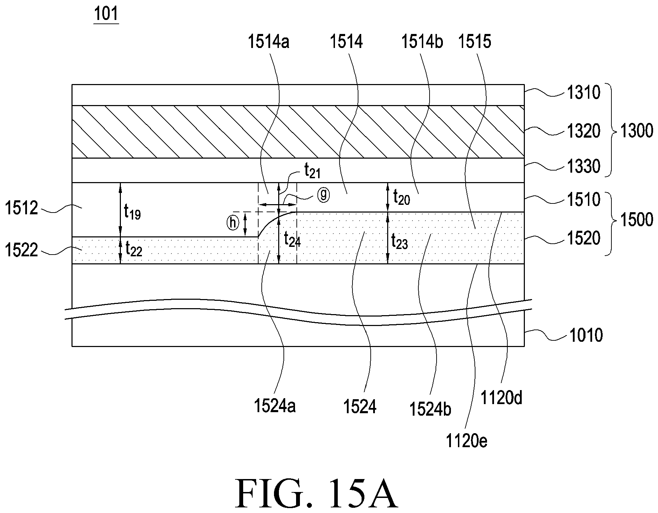

FIG. 15A is a view showing a window member including a single coating layer disposed on a display and a protective film disposed on the window member of an electronic device 101 according to another embodiment of the disclosure.

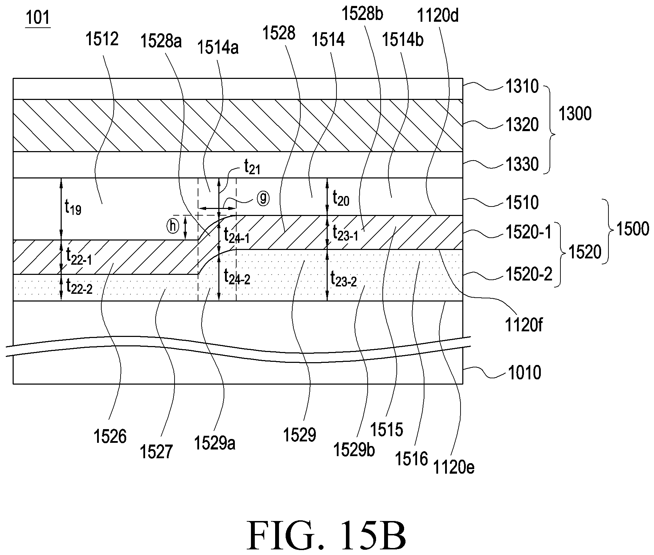

FIG. 15B is a view showing a window member including coating layers which are arranged on a display and have different hardnesses, and a protective film disposed on the window member of an electronic device 101 according to another embodiment of the disclosure.

Referring to FIG. 15A and FIG. 15B, the electronic device 101 may include a protective film 1300, a window member 1500, and a display 1010 (e.g., a flexible display). The configurations of the electronic device 101 in FIG. 15A and FIG. 15B may be totally or partially the same as the configurations of the electronic device 101 in FIG. 3A to FIG. 3C, and the configurations of the display 1010 in FIG. 5A and FIG. 5B may be totally or partially the same as the configurations of the display 403 in FIG. 3A to FIG. 3C.

According to various embodiments, the window member 1500 may be disposed on the display 1010. According to an embodiment, the window member 1500 may cover at least a part of the display 1010 and protect the display 1010 from external impact. According to an embodiment, the display 1010 may be visually exposed to the outside of the electronic device 101 through the window member 1500. According to an embodiment, the display 1010 may include the window member 1500.

According to various embodiments, the window member 1500 may include a glass member 1510. The glass member 1510 may be formed of a material which is substantially transparent and flexible. For example, at least a part of the glass member 1510 may include glass (e.g., ultra-thin glass (UTG) having a bendable thickness.

According to various embodiments, the glass member 1510 may include multiple regions having different thicknesses and/or widths. For example, the glass member 1510 may include a flat region 1512 and at least one folding region 1514 extending from the flat region 1512. According to an embodiment, the flat region 1512 may be one region of the glass member 1510 having a substantially uniform thickness and/or width, and the folding region 1514 may be another region of the glass member 1510 having a thickness and/or a width different from those of the flat region 1512. According to an embodiment, in case that the electronic device 101 is folded or rolled, the glass member 1510 may be bent based on the folding region 1514. According to an embodiment, when the electronic device 101 and/or the glass member 1510 is manufactured, the flat region 1512 and the folding region 1514 may be bendable.

According to various embodiments, when the electronic device 101 is in the closed state, the flat region 1512 may not be bendable. According to an embodiment, the flat region 1512 may be seated in a first structure (e.g., the first structure 401 in FIG. 2A) of the electronic device 101.

According to various embodiments, when the electronic device 101 is in the closed state, the folding region 1514 may be bendable. According to an embodiment, at least a part of the folding region 1514 may be accommodated in a second structure (e.g., the second structure 402 in FIG. 2A) movably disposed in the first structure of the electronic device 101.

According to various embodiments, the folding region 1514 may include multiple folding regions 1514a and 1514b having different thicknesses and/or widths. According to an embodiment, the folding region 1514 may include a first folding region 1514a and a second folding region 1514b extending from one end of the first folding region 1514a. The second folding region 1514b may be positioned in a direction opposite to the flat region 1512 with reference to the first folding region 1514a. According to an embodiment, a twentieth thickness t20, which is the thickness of the second folding region 1514b, may be substantially uniform while having a predetermined thickness, and twenty-first thickness t21, which is the thickness of the first folding region 1514a, may decrease continuously compared to a nineteenth thickness t19, which is the thickness of the flat region 1512, and may increase continuously compared to the twentieth thickness t20. A structure, in which the thickness (e.g., the twenty-first thickness t21) of the folding region 1512 changes continuously, may be defined as a structure in which the thickness changes gradually without mechanical steps or a concave-convex. For example, the surface of the folding region 1514 may be formed substantially uniformly. According to various embodiments, at least a part of the folding region 1514 of the glass member 1510 may be formed using a chemical solution. For example, at least a part of the folding region 1514 may include a recess 1515 formed through a reaction with at least one of ammonium fluoride (NH₄F), sulfuric acid (H₂SO₄), nitric acid (HNO₃), fluorosilicic acid (H₂SIF₆), sodium hydroxide (NAOH), or hydrofluoric acid (HF).

According to various embodiments, the window member 1500 may include a coating layer and/or a film layer (hereinafter, referred to as a coating layer) 1520. According to an embodiment (e.g., FIG. 15A), the coating layer 1520 may be a single coating layer. According to another embodiment (e.g., FIG. 15B), the coating layer 1520 may include a high-hardness coating layer 1520-1 and a low-hardness coating layer 1520-2. According to an embodiment, the coating layer 1520 may absorb at least a part of the force applied to the display 1010 from inside the electronic device 101. According to an embodiment, a coating member and/or a film member of the coating layer 1520 may include at least one of an optical clear adhesive (OCA) or an optical clear resin (OCR).

According to various embodiments, the coating layer 1520 may be a single coating layer and may flatten at least a part of the window member 1500. For example, the coating layer 1520 may be positioned in the recess 1515 of the folding region 1514 to make the thickness and/or the width of the window member 1500 uniform. For example, the sum of the thicknesses of the glass member 1510 and the coating layer 1520 may be substantially constant. According to an embodiment, at least a part of the coating layer 1520 may be disposed under the glass member 1510. For example, the coating layer 1520 may include a fourth surface 1120d facing the glass member 1510 and a fifth surface 1120e facing the display 1010. The fifth surface 1120e may be formed substantially flat, and a surface of the fourth surface 1120d, which faces the flat region 1512, may be formed flat, and another surface thereof, which faces the folding region 1514, may be formed to correspond to the shape of the folding region 1514.

According to various embodiments, the coating layer 1520 may include a first coating region 1522 positioned below the flat region 1512 and a second coating region 1524 positioned below the folding region 1514. The coating layer 1520 may be formed in a shape corresponding to the shapes of the flat region 1512 and the folding region 1514. According to an embodiment, the second coating region 1524 may include a (2-1)th coating region 1524a disposed below the first folding region 1514a, and a (2-2)th coating region 1524b disposed below the second folding region 1514b. A thickness (e.g., the twenty-second thickness t22) of the first coating region 1522 may be substantially uniform while having a predetermined thickness. A thickness (e.g., twenty-third thickness t23) of the second coating region 1524 may be greater than the thickness (e.g., the twenty-second thickness t22) of the first coating region 1522. For example, the thickness (e.g., the twenty-third thickness t23) of the (2-2)th coating region 1524b may be formed substantially uniformly while having a thickness greater than the twenty-second thickness t22, and the thicknesses (e.g., the twenty-fourth thickness t24) of the (2-1)th coating region 1524a may increase continuously compared to twenty-second thickness t22 of the first coating region 1522, and decrease continuously compared to the twenty-third thickness t23 of the (2-2)th coating region 1524b.

According to various embodiments, the coating layer 1520 may include the high-hardness coating layer 1520-1 and the low-hardness coating layer 1520-2, and may flatten at least a part of the window member 1500. For example, the high-hardness coating layer 1520-1 may be positioned in the recess 1515 of the folding region 1514 and the low-hardness coating layer 1520-2 may be positioned in the recess 1516 of the fourth coating region 1528, to uniformize the thickness and/or the width of the window member 1500. For example, the sum of thicknesses of the glass member 1510, the high-hardness coating layer 1520-1, and the low-hardness coating layer 1520-2 may be substantially constant. According to an embodiment, at least a part of the high-hardness coating layer 1520-1 may be disposed under the glass member 1510. For example, the high-hardness coating layer 1520-1 may include a fourth surface 1120d facing the glass member 1510 and a sixth surface 1120f facing the low-hardness coating layer 1520-2. A surface of the fourth surface 1120d, which faces the flat region 1512, may be formed flat, and the other surface thereof, which faces the folding region 1514, may be formed to correspond to the shape of the folding region 1514. A surface of the sixth surface 1120f, which faces a fifth coating region 1527 of the low-hardness coating layer 1520-2, may be formed flat, and the other surface thereof, which faces a sixth coating region 1529 of the low-hardness coating layer 1520-2, may be formed to correspond to the shape of the sixth coating region 1529. According to an embodiment, at least a part of the low-hardness coating layer 1520-2 may be disposed under the high-hardness coating layer 1520-1. For example, the low-hardness coating layer 1520-2 may include the sixth surface 1120f facing the high-hardness coating layer 1520-1, and the fifth surface 1120e facing the display 1010. The fifth surface 1120e may be formed substantially flat. According to an embodiment, the thickness of the low-hardness coating layer 1520-2 may be greater than the thickness of the high-hardness coating layer 1520-1. For example, the thickness of the high-hardness coating layer 1520-1 may be about 10 µm to 200 µm, and the thickness of the low-hardness coating layer 1520-2 may be about 10 µm to 500 µm.

According to various embodiments, the high-hardness coating layer 1520-1 may include a third coating region 1526 positioned below the flat region 1512 and a fourth coating region 1528 positioned below the folding region 1514. The high-hardness coating layer 1520-1 may be formed in a shape corresponding to the shapes of the flat region 1512 and the folding region 1514. According to an embodiment, the fourth coating region 1528 may include a (4-1)th coating region 1528a disposed below the first folding region 1514a, and a (4-2)th coating region 1528b disposed below the second folding region 1514b. A thickness (e.g., the (22-1)th thickness t22-1) of the third coating region 1526 may be substantially uniform while having a predetermined thickness. A thickness (e.g., the (23-1)th thickness t23-1) of the (4-2)th coating region 1528b may be formed substantially uniformly, and the sum of the twentieth thickness t20 and the (23-1)th thickness t23-1 may be substantially the same as the nineteenth thickness t19. A thickness (e.g., the (24-1)th thickness t24-1) of the (4-1)th coating region 1528a may be substantially the same as subtracting the thickness (e.g., the (24-2)th thickness t24-2) of a (6-1)th coating region 1529a described later from the twenty-fourth thickness t24.

According to various embodiments, the low-hardness coating layer 1520-2 may include a fifth coating region 1527 positioned below the third coating region 1526 and a sixth coating region 1529 positioned below the fourth coating region 1528. The low-hardness coating layer 1520-1 may be formed in a shape corresponding to the shapes of the third coating region 1526 and the fourth coating region 1528. According to an embodiment, the sixth coating region 1529 may include a (6-1)th coating region 1529a disposed below the (4-1)th coating region 1528a, and a (6-2)th coating region 1529b disposed below the (4-2)th coating region 1528b. The thickness (e.g., the (22-2)th thickness t22-2) of the fifth coating region 1527 may be substantially uniform while having a predetermined thickness. A thickness (e.g., the (23-2)th thickness t23-2) of the sixth coating region 1529 may be greater than the thickness (e.g., the (22-2)th thickness t22-2) of the fifth coating region 1527. For example, the thickness (e.g., the (23-2)th thickness t23-2) of the (6-2)th coating region 1529b may be formed substantially uniformly while having a thickness greater than the (22-2)th thickness t22-2, and the thicknesses (e.g., the (24-2)th thickness t24-2) of the (6-1)th coating region 1529a may increase continuously compared to the (22-2)th thickness t22-2 of the fifth coating region 1527, and decrease continuously compared to the (23-2)th thickness t23-2 of the (6-2)th coating region 1529b.

According to various embodiments, in order to secure visibility, a method of minimizing the interface caused by light reflection and minimizing visibility of a folding region through refractive index matching and transmittance matching may be considered. According to an embodiment, the processing ratio (ⓖ : ⓗ) of the distance ⓖ between the boundary between the first flat region 1512 and the first folding region 1514a and the boundary between the first folding region 1514a and the second folding region 1514b and the difference ⓗ between the thickness (e.g., the nineteenth thickness t19) of the first flat region 1512 and the thickness (e.g., the twentieth thickness t20) of the second folding region 1514b may satisfy a predetermined ratio. For example, the processing ratio (ⓖ : ⓗ) may satisfy a ratio of about 40 : 3 to about 1000 : 1. According to an embodiment, the coating layer 1520 may be coated on the entire lower region of the glass member 1510. According to an embodiment, a difference in refractive index between the glass member 1510 and the coating layer 1520 may satisfy a predetermined value. For example, in case that the coating layer 1520 is a single coating layer, a difference in refractive index between the glass member 1510 and the coating layer 1520 may be within about 0.13. In case that the coating layer 1520 includes the high-hardness coating layer 1520-1 and the low-hardness coating layer 1520-2, a difference in refractive index between the glass member 1510 and each of the coating layers 1520-1 and 1520-2 may be within about 0.13. As another example, in case that the coating layer 1520 is a single coating layer, a difference in refractive index between the glass member 1510 and the coating layer 1520 may be about 0.1. In case that the coating layer 1520 includes the high-hardness coating layer 1520-1 and the low-hardness coating layer 1520-2, a difference in refractive index between the glass member 1510 and each of the coating layers 1520-1 and 1520-2 may be about 0.1. According to an embodiment, the transmittance of the coating member or the film member of the coating layer 1520 may satisfy a predetermined percentage or higher. For example, the coating member or the film member of the coating layer 1520 may have a transmittance of about 80% or greater. According to an embodiment, the fifth surface 1120e of the coating layer 1520, which faces the display 1010, may be flat so that the surface roughness Ra thereof becomes less than a predetermined value. For example, in case that the coating layer 1520 is a single coating layer, the surface roughness Ra of the fifth surface 1120e of the coating layer 1520 may be less than about 10 µm, and in case that the coating layer 1520 includes the high-hardness coating layer 1520-1 and the low-hardness coating layer 1520-2, the surface roughness Ra of the fifth surface 1120e of the low-hardness coating layer 1520-2 may be less than about 10 µm.

According to various embodiments, the glass member 1510 may have very low elongation. Therefore, in order to ensure durability thereof, a method of securing durability against repeated folding through adhesion and elongation with respect to tensile strain and a tensile force generated during folding may be considered. According to an embodiment, the adhesive force between the glass member 1510 and the coating layer 1520 may satisfy a predetermined value or greater. For example, the adhesive force between the glass member 1510 and the coating layer 1520 may be about 1 kgf/in or greater. According to an embodiment, the elongation of the coating layer 1520 may satisfy a predetermined percentage or higher. For example, the elongation of the coating layer 1520 may be 3% or greater.

According to various embodiments, the thicknesses of the entire part of the window member 1500 should be equal. In order to implement a low repulsive force, a method of lowering the hardness of the coating layer 1520 for compensating for the variable shape in the folding region 1514 may be considered. According to an embodiment, a Shore hardness (Shore D) indicating the hardness of the coating layer 1520 may satisfy a predetermined value or less. For example, in case that the coating layer 1520 includes the high-hardness coating layer 1520-1 and the low-hardness coating layer 1520-2, the shore hardness of the low-hardness coating layer 1520-2 may be about 45 or less. According to an embodiment, in case that the coating layer 1520 includes a high-hardness coating layer 1520-1 and a low-hardness coating layer 1520-2 and the high-hardness coating layer 1520-1 is formed of multiple layers, patterns may be added between the multiple layers of the high-hardness coating layer 1520-1.

According to various embodiments, the glass member 1510 may be damaged by tensile strain. In order to secure impact resistance, a method of minimizing tensile strain by disposing the high-hardness coating layer 1520-1 under the glass member 1510, and absorbing an impact by disposing the low-hardness coating layer 1520-2 under the high-hardness coating layer 1520-1 may be considered. According to an embodiment, in the coating layer 1520 including the high-hardness coating layer 1520-1 and the low-hardness coating layer 1520-2, a Shore hardness (Shore D) indicating the hardness of the high-hardness coating layer 1520-1 disposed between the glass member 1510 and the low-hardness coating layer 1520-2 may satisfy a predetermined value or greater. For example, in case that the high-hardness coating layer 1520-1 includes one or multiple layers, each of the layers may have a Shore hardness of about 60 or greater.

According to various embodiments, the protective film 1300 may be disposed on the window member 1500. According to an embodiment, the protective film 1300 may be disposed on the window member 1500 to form at least a part of the outer surface of the electronic device 101 together with the window member 1500. For example, the protective film 1300 may form at least a part of the front surface (e.g., the first surface 210a and the third surface 220a in FIG. 2A) of the electronic device 101. According to an embodiment, the protective film 1300 may cover at least a part of the window member 1500, protect the window member 1500, and have characteristics such as impact resistance, contamination resistance, scratch resistance, and abrasion resistance also. According to an embodiment, the protective film 1300 may be made of a substantially transparent material so that the display 1010 is visually exposed to the outside together with the window member 1500.

According to various embodiments, the protective film 1300 may include a hard coating layer 1310. According to an embodiment, the hard coating layer 1310 may be positioned at the uppermost layer of the protective film 1300, and be made of indurative resin having characteristic such as contamination resistance, scratch resistance, and abrasion resistance. For example, the hard coating layer 1310 may be made of an indurative resin such as acrylic, silicone, or urethane. According to an embodiment, the hard coating layer 1310 may have a predetermined tensile elastic modulus and thickness. For example, the hard coating layer 1310 may have a tensile elastic modulus of about 10 MPa to 10⁵ MPa, and may have a thickness of about 1 µm to 100 µm.

According to various embodiments, the protective film 1300 may include a polymeric film layer 1320. According to an embodiment, the polymeric film layer 1320 may be positioned in the middle of the protective film 1300, and may be positioned between the hard coating layer 1310 and the window member 1400. According to an embodiment, the polymeric film layer 1320 may be made of a substrate having a film form and using a thermoplastic polymer. For example, the polymeric film layer 1320 may be made of a substrate having a film form and using a resin such as PET, PI, PE, PMMA, PC, or PS. According to an embodiment, primer treatment using urethane, silicone, acrylic, etc. may be separately applied to the surface in which the polymeric film layer 1320 and the hard coating layer 1310 are in contact with each other to improve an adhesive force with respect to the hard coating layer 1310. According to an embodiment, the polymeric film layer 1320 may have a predetermined elongation and tensile elastic modulus to demonstrate flexibility and folding properties. For example, the polymeric film layer 1320 may have an elongation of about 0.5% to 50%, and may have a tensile elastic modulus of about 10 MPa to 10⁵ MPa.

According to various embodiments, the protective film 1300 may include an adhesive layer 1330. According to an embodiment, the adhesive layer 1330 may be positioned at the lowermost layer of the protective film 1300 so that the polymer layer 1320 and the window member 1400 are bonded to each other. According to an embodiment, the adhesive layer 1330 may be made of an indurative resin hardened by UV light and heat. For example, the adhesive layer 1330 may be made of a resin such as acrylic, urethane, or silicone. According to an embodiment, the adhesive force, in which the adhesive layer 1330 is bonded to the window member 1400, may satisfy a predetermined range to prevent the generation of peeling or bubbles therebetween even in case that the window member 1400 is folded. For example, the adhesive force of the adhesive layer 1330 may be about 0.1 kgf/inch to 2.0 kgf/inch. According to an embodiment, the adhesive layer 1330 may satisfy a predetermined physical property to minimize deformation of the polymeric film layer 1320 due to external impact. For example, the adhesive layer 10 may have a tensile elastic modulus of about 10⁻³ MPa to 10⁴ MPa, and may have a thickness of about 0.1 µm to 100 µm.

Although FIG. 15A and FIG. 15B shows that the protective film 1300 includes three layers including a hard coating layer 1310, a polymer film layer 1320, and an adhesive layer 1330, the number of layers constituting the protective film 1300 is not limited thereto, and the protective film may include multiple layers three or more. For example, the protective film 1300 may further include a primer layer provided on each of the hard coating layer 1310 and the polymer film layer 1320 in addition to the hard coating layer 1310, the polymeric film layer 1320, and the adhesive layer 1330.

An electronic device (e.g., 101 in FIG. 1, 101 in FIG. 2A and FIG. 2B, and 101 in FIG. 3A to FIG. 3C) according to various embodiments of the disclosure may include a flexible display (e.g., 200 in FIG. 2A, 310 in FIG. 2B, 403 in FIG. 3A to FIG. 3C, 410 in FIG. 4A and FIG. 4B, and 410 in FIG. 5A and FIG. 5B) and a flexible window member (e.g., 500 in FIG. 4A and FIG. 4B, and 600 in FIG. 5A and FIG. 5B) stacked and disposed on the flexible display and configured to be deformable in response to a shape change of the flexible display, wherein the flexible window member may include a glass member (e.g., 510 in FIG. 4A and FIG. 4B, and 610 in FIG. 5A and. FIG. 5B) and a coating layer (e.g., 520 in FIG. 4A and 620 in FIG. 5A) disposed between the glass member and the flexible display panel, the glass member may include at least one flat region (e.g., 512 in FIG. 4A and FIG. 4B, and 612 in FIG. 5A and FIG. 5B) and a folding region (e.g., 514 in FIG. 4A and FIG. 4B, and 614 in FIG. 5A and FIG. 5B) extending from the at least one flat region, and the folding region may include a first folding region having a continuously decreasing thickness compared to the thickness of the at least one flat region, and a second folding region extending from the first folding region and having a thickness smaller than the thickness of the at least one flat region.

According to various embodiments, the electronic device (e.g., 101 in FIG. 1, 101 in FIG. 2A and FIG. 2B, and 101 in FIG. 3A to FIG. 3C) may include the folding region further including a third folding region extending from the second folding region and having a continuously increasing thickness compared to the thickness of the second folding region.

According to various embodiments, in the electronic device (e.g., 101 in FIG. 1, 101 in FIG. 2A and FIG. 2B, and 101 in FIG. 3A to FIG. 3C), the at least one flat region may include a first flat region and a second flat region spaced apart from the first flat region, and the folding region may be positioned between the first flat region and the second flat region.

According to various embodiments, in the electronic device (e.g., 101 in FIG. 1, 101 in FIG. 2A and FIG. 2B, and 101 in FIG. 3A to FIG. 3C), the first folding region may be formed by a processing ratio within a predetermined range, and the processing ratio may indicate a ratio of a difference between the thickness of the at least one flat region and the thickness of the second folding region with respect to a distance between a boundary between the at least one flat region and the first folding region and a boundary between the first folding region and the second folding region.

In the electronic device (e.g., 101 in FIG. 1, 101 in FIG. 2A and FIG. 2B, and 101 in FIG. 3A to FIG. 3C) according to various embodiments, the predetermined range of the processing ratio may be 40 : 3 to 1000 : 1.

In the electronic device (e.g., 101 in FIG. 1, 101 in FIG. 2A and FIG. 2B, and 101 in FIG. 3A to FIG. 3C) according to various embodiments, the coating layer may include a first coating layer and a second coating layer, the first coating layer may be disposed under the glass member and the second coating layer may be disposed between the first coating layer and the flexible display, and the hardness of the second coating layer may be smaller than the hardness of the first coating layer.

In the electronic device (e.g., 101 in FIG. 1, 101 in FIG. 2A and FIG. 2B, and 101 in FIG. 3A to FIG. 3C) according to various embodiments, the second coating layer may include at least one first coating region positioned below the at least one flat region, and a second coating region which extends from the first coating region and is positioned below the folding region, and the second coating region may include a (2-1)th coating region having a continuously increasing thickness compared to the thickness of the at least one first coating region, and a (2-2)th coating region extending from the (2-1)th coating region and having a thickness greater than the thickness of the at least one first coating region.

In the electronic device (e.g., 101 in FIG. 1, 101 in FIG. 2A and FIG. 2B, and 101 in FIG. 3A to FIG. 3C) according to various embodiments, the refractive index difference between the glass member and the coating layer may be within 0.13.

In the electronic device (e.g., 101 in FIG. 1, 101 in FIG. 2A and FIG. 2B, and 101 in FIG. 3A to FIG. 3C) according to various embodiments, the refractive index difference between the glass member and the first coating layer may be within 0.13, and the refractive index difference between the glass member and the second coating layer may be within 0.13.

In the electronic device (e.g., 101 in FIG. 1, 101 in FIG. 2A and FIG. 2B, and 101 in FIG. 3A to FIG. 3C) according to various embodiments, the coating layer may have a transmittance equal to or greater than 80%.

In the electronic device (e.g., 101 in FIG. 1, 101 in FIG. 2A and FIG. 2B, and 101 in FIG. 3A to FIG. 3C) according to various embodiments, a surface of the coating layer, which is opposite to a surface facing the glass member, may have a surface roughness (Ra) less than 10 µm.

In the electronic device (e.g., 101 in FIG. 1, 101 in FIG. 2A and FIG. 2B, and 101 in FIG. 3A to FIG. 3C) according to various embodiments, the adhesion force between the glass member and the coating layer may be equal to or greater than 1 kgf/inch.

In the electronic device (e.g., 101 in FIG. 1, 101 in FIG. 2A and FIG. 2B, and 101 in FIG. 3A to FIG. 3C) according to various embodiments, the coating layer may have an elongation equal to or greater than 3%.

In the electronic device (e.g., 101 in FIG. 1, 101 in FIG. 2A and FIG. 2B, and 101 in FIG. 3A to FIG. 3C) according to various embodiments, the coating layer may have a Shore hardness (shore D) equal to or smaller than 45.

In the electronic device (e.g., 101 in FIG. 1101 in FIG. 2A and FIG. 2B, and 101 in FIG. 3A to FIG. 3C) according to various embodiments, the second coating layer may have a Shore D of equal to or smaller than 45.

In the electronic device (e.g., 101 in FIG. 1, 101 in FIG. 2A and FIG. 2B, and 101 in FIG. 3A to FIG. 3C) according to various embodiments, the first coating layer may have a Shore hardness (shore D) equal to or greater than 60

An electronic device (e.g., 101 in FIG. 1, and 101 in FIG. 2A and FIG. 2B) according to various embodiments may include a hinge, a first housing and a second housing connected to the hinge, a flexible display disposed on the hinge, the first housing, and the second housing, and a flexible window member stacked and disposed on the flexible display and configured to be deformable in response to a shape change of the flexible display, wherein the flexible window member may include a glass member and a coating layer disposed between the glass member and the flexible display panel, the glass member may include at least one flat region corresponding to the first housing and the second housing and a folding region extending from the at least one flat region and corresponding to the hinge, and the folding region may include a first folding region having a continuously decreasing thickness compared to the thickness of the at least one flat region, a second folding region extending from the first folding region and having a thickness smaller than the thickness of the at least one flat region, and a third folding region extending from the second folding region and having a continuously increasing thickness compared to the thickness of the second folding region.

According to various embodiments, in the electronic device (e.g., 101 in FIG. 1, and 101 in FIG. 2A and FIG. 2B), the first folding region may be formed by a processing ratio within a predetermined range, and the processing ratio may indicate a ratio of a difference between the thickness of the at least one flat region and the thickness of the second folding region with respect to a distance between a boundary between the at least one flat region and the first folding region and a boundary between the first folding region and the second folding region.

According to various embodiments, the electronic device (e.g., 101 in FIG. 1, and 101 in FIG. 2A and FIG. 2B) may further include a protective film including multiple layers stacked on the flexible window member, and the multiple layers included in the protective film may include an adhesive layer disposed on the flexible glass member, a polymer film layer disposed on the adhesive layer and bonded to the flexible glass member by the adhesive layer, and a hard coating layer disposed on the polymer film layer.

An electronic device (e.g., 101 in FIG. 1, and 101 in FIG. 3A to FIG. 3C) according to various embodiments may further include a first structure including a first plate configured to provide a first surface and a second surface facing an opposite direction of the first surface, a second structure coupled to surround at least a part of the first structure and configured to guide a slide movement of the first structure in a direction parallel to the first surface or the second surface of the first structure, a roller rotatably mounted to an edge a side of the second structure, a flexible display including a first region disposed on the first surface of the first structure and a second region extending from the first region, the flexible display being configured such that the second region is inserted or accommodated inside the second structure from a side of the second structure or exposed to the outside of the second structure while being at least partially guided by the roller according to the slide movement of the first structure, and a flexible window member stacked and disposed on the flexible display and configured to be deformable in response to a shape change of the flexible display, wherein the flexible window member may include a glass member and a coating layer disposed between the glass member and the flexible display panel, the glass member includes at least one flat region corresponding to the first region and a folding region extending from the at least one flat region and corresponding to the second region, and the folding region may include a first folding region having a continuously decreasing thickness compared to the thickness of the at least one flat region and a second folding region extending from the first folding region and having a thickness smaller than the thickness of the at least one flat region.

According to various embodiments, in the electronic device (e.g., 101 in FIG. 1, and 101 in FIG. 3A to FIG. 3C), the first folding region may be formed by a processing ratio within a predetermined range, and the processing ratio may indicate a ratio of a difference between the thickness of the at least one flat region and the thickness of the second folding region with respect to a distance between a boundary between the at least one flat region and the first folding region and a boundary between the first folding region and the second folding region.

According to various embodiments, the electronic device (e.g., 101 in FIG. 1, and 101 in FIG. 3A to FIG. 3C) may further include a protective film including multiple layers stacked on the flexible window member, and the multiple layers included in the protective film may include an adhesive layer disposed on the flexible glass member, a polymer film layer disposed on the adhesive layer and bonded to the flexible glass member by the adhesive layer, and a hard coating layer disposed on the polymer film layer.

An electronic device (e.g., 101 in FIG. 1, 101 in FIG. 2A and FIG. 2B, and 101 in FIG. 3A to FIG. 3C) according to various embodiments of the disclosure may include a flexible display (e.g., 200 in FIG. 2A, 310 in FIG. 2B, 403 in FIG. 3A to FIG. 3C, 410 in FIG. 4A and FIG. 4B, and 410 in FIG. 5A and FIG. 5B), a flexible glass member (e.g., 510 in FIG. 4A and FIG. 4B, 610 in FIG. 5A and FIG. 5B, 1210 in FIG. 13, 1410 in FIG. 14A and FIG. 14B, and 1510 in FIG. 15A and FIG. 15B) stacked and disposed on the flexible display and configured to be deformable in response to a shape change of the flexible display, and a protective film (1300 in FIG. 13 to FIG. 15B) including multiple layers stacked and arranged on the flexible glass member, wherein the multiple layers included in the protective film may include an adhesive layer disposed on the flexible glass member, a polymeric film layer disposed on the adhesive layer and bonded to the flexible glass member by the adhesive layer, and a hard coating layer disposed on the polymeric film layer.

According to various embodiments, the hard coating layer of the electronic device (e.g., 101 in FIG. 1, 101 in FIG. 2A and FIG. 2B, and 101 in FIG. 3A to FIG. 3C) may be made of at least one of an acrylic resin, a silicone resin, or a urethane resin.

According to various embodiments, the hard coating layer of the electronic device (e.g., 101 in FIG. 1, 101 in FIG. 2A and FIG. 2B, and 101 in FIG. 3A to FIG. 3C) may have a tensile elastic modulus of 10 MPa to 10⁵ MPa.

According to various embodiments, the hard coating layer of the electronic device (e.g., 101 in FIG. 1, 101 in FIG. 2A and FIG. 2B, and 101 in FIG. 3A to FIG. 3C) may have a thickness of 1 µm to 100 µm.

According to various embodiments, the polymeric film layer of the electronic device (e.g., 101 in FIG. 1, 101 in FIG. 2A and FIG. 2B, and 101 in FIG. 3A to FIG. 3C) may be made of a substrate having a film form and using at least one of PET, PI, PE, PMMA, PC or PS.

According to various embodiments, in the electronic device (e.g., 101 in FIG. 1, 101 in FIG. 2A and FIG. 2B, and 101 in FIG. 3A to FIG. 3C), a primer treatment may be applied to a surface of the polymeric film layer, which is in contact with the hard coating layer.

According to various embodiments, the polymeric film layer of the electronic device (e.g., 101 in FIG. 1, 101 in FIG. 2A and FIG. 2B, and 101 in FIG. 3A to FIG. 3C) may have an elastic elongation of 0.5% to 50%.

According to various embodiments, the polymeric film layer of the electronic device (e.g., 101 in FIG. 1, 101 in FIG. 2A and FIG. 2B, and 101 in FIG. 3A to FIG. 3C) may have a tensile elastic modulus of 10 MPa to 10⁵ MPa.

According to various embodiments, the adhesive layer of the electronic device (e.g., 101 in FIG. 1, 101 in FIG. 2A and FIG. 2B, and 101 in FIG. 3A to FIG. 3C) may be made of a UV curable resin or a thermosetting resin.

According to various embodiments, in the electronic device (e.g., 101 in FIG. 1, 101 in FIG. 2A and FIG. 2B, and 101 in FIG. 3A to FIG. 3C), the adhesive force of the adhesive layer bonding to the glass member is 0.1 kgf/inch to 2.0 kgf/inch.

According to various embodiments, the adhesive layer of the electronic device (e.g., 101 in FIG. 1, 101 in FIG. 2A and FIG. 2B, and 101 in FIG. 3A to FIG. 3C) may have a tensile elastic modulus of 10⁻³ MPa to 10⁴ MPa.

According to various embodiments, the adhesive layer of the electronic device (e.g., 101 in FIG. 1, 101 in FIG. 2A and FIG. 2B, and 101 in FIG. 3A to FIG. 3C) may have a thickness of 0.1 µm to 100 µm.

According to various embodiments, the glass member of the electronic device (e.g., 101 in FIG. 1, 101 in FIG. 2A and FIG. 2B, and 101 in FIG. 3A to FIG. 3C) may further include a coating layer between the glass member and the flexible display, the glass member may include at least one flat region and a folding region extending from the at least one flat region, and the folding region may include a first folding region having a continuously decreasing thickness compared to the thickness of the at least one flat region, and a second folding region extending from the first folding region and having a thickness smaller than the thickness of the at least one flat region.

According to various embodiments, the folding region of the electronic device (e.g., 101 in FIG. 1, 101 in FIG. 2A and FIG. 2B, and 101 in FIG. 3A to FIG. 3C) may further include a third folding region extending from the second folding region and having a continuously increasing thickness compared to the thickness of the second folding region.

According to various embodiments, the at least one flat region of the electronic device (e.g., 101 in FIG. 1, 101 in FIG. 2A and FIG. 2B, and 101 in FIG. 3A to FIG. 3C) may include a first flat region and a second flat region spaced apart from the first flat region, and the folding region may be positioned between the first flat region and the second flat region.

According to various embodiments, the first folding region of the electronic device (e.g., 101 in FIG. 1, 101 in FIG. 2A and FIG. 2B, and 101 in FIG. 3A to FIG. 3C) may be formed by a processing ratio within a predetermined range, and the processing ratio may indicate a ratio of a difference between the thickness of the at least one flat region and the thickness of the second folding region with respect to a distance between a boundary between the at least one flat region and the first folding region and a boundary between the first folding region and the second folding region.

According to various embodiments, the predetermined range of the processing ratio of the electronic device (e.g., 101 in FIG. 1, 101 in FIG. 2A and FIG. 2B, and 101 in FIG. 3A to FIG. 3C) may be 40 : 3 to 1000 : 1.

According to various embodiments, the coating layer of the electronic device (e.g., 101 in FIG. 1, 101 in FIG. 2A and FIG. 2B, and 101 in FIG. 3A to FIG. 3C) may include a first coating layer and a second coating layer, the first coating layer may be disposed under the glass member and the second coating layer may be disposed between the first coating layer and the flexible display, and the hardness of the second coating layer may be smaller than the hardness of the first coating layer.

According to various embodiments, the second coating layer of the electronic device (e.g., 101 in FIG. 1, 101 in FIG. 2A and FIG. 2B, and 101 in FIG. 3A to FIG. 3C) may include at least one first coating region positioned below the at least one flat region, and a second coating region which extends from the first coating region and is positioned below the folding region, and the second coating region may include a (2-1)th coating region having a continuously increasing thickness compared to the thickness of the at least one first coating region, and a (2-2)th coating region extending from the (2-1)th coating region and having a thickness greater than the thickness of the at least one first coating region.

The electronic device according to various embodiment of the disclosure described above may not be limited by the above-described embodiments and drawings, and it will be obvious to a person skilled in the technical field, to which the disclosure belongs, that various substitutions, modifications, and changes are possible within the technical scope of the disclosure.

## Claims

1. An electronic device comprising:
a flexible display; and
a flexible window member stacked and disposed on the flexible display and configured to be deformable in response to a shape change of the flexible display,
wherein the flexible window member comprises a glass member and a coating layer disposed between the glass member and the flexible display panel,
the glass member comprises at least one flat region and a folding region extending from the at least one flat region, and
the folding region comprises a first folding region having a continuously decreasing thickness compared to the thickness of the at least one flat region, and a second folding region extending from the first folding region and having a thickness smaller than the thickness of the at least one flat region.

2. The electronic device of claim 1, wherein the folding region further comprises a third folding region extending from the second folding region and having a continuously increasing thickness compared to the thickness of the second folding region.

3. The electronic device of any one of claim 1 or 2, wherein the at least one flat region comprises a first flat region and a second flat region spaced apart from the first flat region, and
the folding region is positioned between the first flat region and the second flat region.

4. The electronic device of any one of claim 1 or 2, wherein the first folding region is formed by a processing ratio within a predetermined range, and the processing ratio indicates a ratio of a difference between the thickness of the at least one flat region and the thickness of the second folding region with respect to a distance between a boundary between the at least one flat region and the first folding region and a boundary between the first folding region and the second folding region.

5. The electronic device of claim 4, wherein the predetermined range of the processing ratio is 40 : 3 to 1000 : 1.

6. The electronic device of any one of claim 1 or 2, wherein the coating layer comprises a first coating layer and a second coating layer,
the first coating layer is disposed under the glass member and the second coating layer is disposed between the first coating layer and the flexible display, and
the hardness of the second coating layer is smaller than the hardness of the first coating layer.

7. The electronic device of claim 6, wherein the second coating layer comprises at least one first coating region positioned below the at least one flat region, and a second coating region which extends from the first coating region and is positioned below the folding region, and
the second coating region comprises a (2-1)th coating region having a continuously increasing thickness compared to the thickness of the at least one first coating region, and a (2-2)th coating region extending from the (2-1)th coating region and having a thickness greater than the thickness of the at least one first coating region.

8. The electronic device of any one of claim 1 or 2, wherein the refractive index difference between the glass member and the coating layer is within 0.13.

9. The electronic device of claim 6, wherein the refractive index difference between the glass member and the first coating layer is within 0.13, and
the refractive index difference between the glass member and the second coating layer is within 0.13.

10. The electronic device of any one of claim 1 or 2, wherein the coating layer has a transmittance equal to or greater than 80%.

11. The electronic device of any one of claim 1 or 2, wherein a surface of the coating layer, which is opposite to a surface facing the glass member, has a surface roughness (Ra) less than 10 µm.

12. The electronic device of any one of claim 1 or 2, wherein the adhesion force between the glass member and the coating layer is equal to or greater than 1 kgf/inch.

13. The electronic device of any one of claim 1 or 2, wherein the coating layer has an elongation equal to or greater than 3%.

14. The electronic device of any one of claim 1 or 2, wherein the coating layer has a Shore hardness (shore D) equal to or less than 45.

15. The electronic device of claim 6, wherein the second coating layer has a Shore D equal to or less than of 45.

16. The electronic device of claim 6, wherein the first coating layer has a Shore hardness (shore D) equal to or greater than 60.

17. An electronic device comprising:
a hinge;
a first housing and a second housing connected to the hinge;
a flexible display disposed on the hinge, the first housing, and the second housing; and
a flexible window member stacked and disposed on the flexible display and configured to be deformable in response to a shape change of the flexible display,
wherein the flexible window member comprises a glass member and a coating layer disposed between the glass member and the flexible display panel,
the glass member comprises at least one flat region corresponding to the first housing and the second housing, and a folding region extending from the at least one flat region and corresponding to the hinge, and
the folding region comprises a first folding region having a continuously decreasing thickness compared to the thickness of the at least one flat region, a second folding region extending from the first folding region and having a thickness smaller than the thickness of the at least one flat region, and a third folding region extending from the second folding region and having a continuously increasing thickness compared to the thickness of the second folding region.

18. The electronic device of claim 17, wherein the first folding region is formed by a processing ratio within a predetermined range, and the processing ratio indicates a ratio of a difference between the thickness of the at least one flat region and the thickness of the second folding region with respect to a distance between a boundary between the at least one flat region and the first folding region and a boundary between the first folding region and the second folding region.

19. An electronic device comprising:
a first structure comprising a first plate configured to provide a first surface and a second surface facing an opposite direction of the first surface;
a second structure coupled to surround at least a part of the first structure and configured to guide a slide movement of the first structure in a direction parallel to the first surface or the second surface of the first structure;
a roller rotatably mounted to an edge a side of the second structure;
a flexible display comprising a first region disposed on the first surface of the first structure and a second region extending from the first region, the flexible display being configured such that the second region is inserted or accommodated inside the second structure from a side of the second structure or exposed to the outside of the second structure while being at least partially guided by the roller according to the slide movement of the first structure; and
a flexible window member stacked and disposed on the flexible display and configured to deformable in response to a shape change of the flexible display,
wherein the flexible window member comprises a glass member and a coating layer disposed between the glass member and the flexible display panel,
the glass member comprises at least one flat region corresponding to the first region, and a folding region extending from the at least one flat region and corresponding to the second region, and
the folding region comprises a first folding region having a continuously decreasing thickness compared to the thickness of the at least one flat region, and a second folding region extending from the first folding region and having a thickness smaller than the thickness of the at least one flat region.

20. The electronic device of claim 19, wherein the first folding region is formed by a processing ratio within a predetermined range, and the processing ratio indicates a ratio of a difference between the thickness of the at least one flat region and the thickness of the second folding region with respect to a distance between a boundary between the at least one flat region and the first folding region and a boundary between the first folding region and the second folding region.

21. An electronic device comprising:
a flexible display;
a flexible glass member stacked and disposed on the flexible display and configured to be deformable in response to a shape change of the flexible display; and
a protective film comprising multiple layers stacked and arranged on the flexible glass member,
wherein the multiple layers included in the protective film comprise an adhesive layer disposed on the flexible glass member, a polymeric film layer disposed on the adhesive layer and bonded to the flexible glass member by the adhesive layer, and a hard coating layer disposed on the polymeric film layer.

22. The electronic device of claim 21, wherein the hard coating layer is made of at least one of an acrylic resin, a silicone resin, or a urethane resin.

23. The electronic device of claim 21, wherein the hard coating layer has a tensile elastic modulus of 10 MPa to 10⁵ MPa.

24. The electronic device of claim 21, wherein the hard coating layer has a thickness of 1 µm to 100 µm.

25. The electronic device of claim 21, wherein the polymeric film layer is made of a substrate having a film form and using at least one of PET, PI, PE, PMMA, PC or PS.

26. The electronic device of claim 21, wherein a primer treatment is applied to a surface of the polymeric film layer, which is in contact with the hard coating layer.

27. The electronic device of claim 21, wherein the polymeric film layer has an elastic elongation of 0.5% to 50%.

28. The electronic device of claim 21, wherein the polymeric film layer has a tensile elastic modulus of 10 MPa to 10⁵ MPa.

29. The electronic device of claim 21, wherein the adhesive layer is made of a UV curable resin or a thermosetting resin.

30. The electronic device of claim 21, the adhesive force of the adhesive layer bonding to the glass member is 0.1 kgf/inch to 2.0 kgf/inch.

31. The electronic device of claim 21, wherein the adhesive layer has a tensile elastic modulus of 10⁻³ to 10⁴ MPa.

32. The electronic device of claim 21, wherein the adhesive layer has a thickness of 0.1 µm to 100 µm.

33. The electronic device of claim 21, wherein the glass member further comprises a coating layer between the glass member and the flexible display,
the glass member comprises at least one flat region and a folding region extending from the at least one flat region, and
the folding region comprises a first folding region having a continuously decreasing thickness compared to the thickness of the at least one flat region, and a second folding region extending from the first folding region and having a thickness smaller than the thickness of the at least one flat region.

34. The electronic device of claim 33, wherein the folding region further comprises a third folding region extending from the second folding region and having a continuously increasing thickness compared to the thickness of the second folding region.

35. The electronic device of any one of claim 33 or 34, wherein the at least one flat region comprises a first flat region and a second flat region spaced apart from the first flat region, and
the folding region is positioned between the first flat region and the second flat region.

36. The electronic device of any one of claim 33 or 34, wherein the first folding region is formed by a processing ratio within a predetermined range, and the processing ratio indicates a ratio of a difference between the thickness of the at least one flat region and the thickness of the second folding region with respect to a distance between a boundary between the at least one flat region and the first folding region and a boundary between the first folding region and the second folding region.

37. The electronic device of claim 36, wherein the predetermined range of the processing ratio is 40 : 3 to 1000 : 1.

38. The electronic device of any one of claim 33 or 34, wherein the coating layer comprises a first coating layer and a second coating layer,
the first coating layer is disposed under the glass member and the second coating layer is disposed between the first coating layer and the flexible display, and
the hardness of the second coating layer is smaller than the hardness of the first coating layer.

39. The electronic device of claim 38, wherein the second coating layer comprises at least one first coating region positioned below the at least one flat region, and a second coating region which extends from the first coating region and is positioned below the folding region, and
the second coating region comprises a (2-1)th coating region having a continuously increasing thickness compared to the thickness of the at least one first coating region, and a (2-2)th coating region extending from the (2-1)th coating region and having a thickness greater than the thickness of the at least one first coating region.

40. The electronic device of claim 17, further comprising a protective film comprising multiple layers stacked and arranged on the flexible window member,
wherein the multiple layers included in the protective film comprise an adhesive layer disposed on the flexible glass member, a polymeric film layer disposed on the adhesive layer and bonded to the flexible glass member by the adhesive layer, and a hard coating layer disposed on the polymeric film layer.

41. The electronic device of claim 19, further comprising a protective film comprising multiple layers stacked and arranged on the flexible window member,
wherein the multiple layers included in the protective film comprise an adhesive layer disposed on the flexible glass member, a polymeric film layer disposed on the adhesive layer and bonded to the flexible glass member by the adhesive layer, and a hard coating layer disposed on the polymeric film layer.
